(19) Europäisches Patentamt
European Patent Office
Office européen des brevets

(11) EP 2 436 717 B1

(12) # EUROPEAN PATENT SPECIFICATION

(45) Date of publication and mention of the grant of the patent:
**28.10.2020 Bulletin 2020/44**

(21) Application number: **10780657.2**

(22) Date of filing: **28.05.2010**

(51) Int Cl.:
***C08G 69/26*** *(2006.01)* ***C08L 77/00*** *(2006.01)*

(86) International application number:
**PCT/JP2010/059137**

(87) International publication number:
**WO 2010/137703 (02.12.2010 Gazette 2010/48)**

(54) **POLYAMIDE RESIN**

POLYAMID-HARZ

RÉSINE DE POLYAMIDE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **28.05.2009 JP 2009129217**
**14.09.2009 JP 2009211831**
**14.09.2009 JP 2009211832**
**14.09.2009 JP 2009211833**
**14.09.2009 JP 2009211840**

(43) Date of publication of application:
**04.04.2012 Bulletin 2012/14**

(73) Proprietor: **Mitsubishi Gas Chemical Company, Inc.**
**Tokyo 100-8324 (JP)**

(72) Inventors:
- **OGAWA, Shun**
**Hiratsuka-shi**
**Kanagawa 254-0016 (JP)**
- **AYUBA, Shinichi**
**Hiratsuka-shi**
**Kanagawa 254-0016 (JP)**
- **SUMINO, Takahiko**
**Hiratsuka-shi**
**Kanagawa 254-0016 (JP)**
- **KUWAHARA, Hisayuki**
**Hiratsuka-shi**
**Kanagawa 254-0016 (JP)**
- **ISHII, Kentaro**
**Hiratsuka-shi**
**Kanagawa 254-0016 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 025 718**
**JP-A- 6 192 416**
**JP-A- 2003 026 797**
**JP-A- 2004 091 595**
**JP-A- 2007 031 630**
**JP-A- 2007 092 053**
**JP-A- 2007 092 054**
**JP-B1- S4 715 106**
**US-A- 3 803 102**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 436 717 B1

**Description**

TECHNICAL FIELD

The present invention relates to a polyamide resin. Particularly, the present invention relates to a polyamide resin containing a paraxylylenediamine unit and a linear aliphatic dicarboxylic acid unit having from 6 to 18 carbon atoms, as main components.

BACKGROUND ART

A crystalline aliphatic polyamide resin such as typically nylon 6 or nylon 66 is widely utilized for fiber applications such as clothing, and also for automobile parts, machinery parts, electric/electronic parts and others as engineering plastics, because of their excellent characteristics of toughness, chemical resistance, electric characteristics and others and the easiness thereof in melt molding. However, owing to poor heat resistance, dimensional stability insufficiency caused by water absorption influence thereon and mechanical strength insufficiency thereof, the resin is problematic in that the range of its use for those applications is limited. These days in particular, in automobile parts applications with advanced metal alternative technology, and surface-mounting technology-related electric/electronic parts applications with rapidly developed semiconductor technology, the required performance is high, and in these, use of traditional aliphatic polyamide resins is often difficult. Polyamide resins excellent in heat resistance, dimensional stability and mechanical performance are desired.

Among them, an aromatic polyamide obtained from metaxylylenediamine and adipic acid (hereinafter referred to as nylon MXD6) is characterized by high strength, high modulus of elasticity and low water absorbability as compared with other traditional aliphatic polyamide resins, and is utilized for automobile parts and electric/electronic parts for which metal alternation as well as weight reduction with down-sizing is desired.

The crystallization speed of nylon MXD6 is slow as compared with that of nylon 6 and nylon 66. Accordingly, nylon MXD6 hardly crystallizes in a mold during injection molding thereof, and is therefore problematic in that thin-wall molding thereof is difficult and the molded products thereof may often warp. For these reasons, for using nylon MXD6 as a molding material, the moldability thereof must be enhanced by adding thereto nylon 66 having a high crystallization speed or talc powder to increase the crystallization speed thereof or by elevating the mold temperature. For example, Patent Document 1 discloses a polyamide resin composition comprising nylon MXD6, nylon 66 and glass fibers.

However, incorporating nylon 66 increases physical change in water-absorbing environments as compared with the case of nylon MXD6 alone, and incorporating talc powder lowers the mechanical strength, and therefore, the amount thereof to be incorporated is limited.

Patent Document 2 discloses a polyamide resin that comprises, for the purpose of introducing a rigid molecular structure into the polyamide molecular chain to thereby increase the crystallinity of the resin, a diamine comprising from 15 to 65 mol% of paraxylylenediamine and from 85 to 35 mol% of metaxylylenediamine, and a dicarboxylic acid comprising from 45 to 80 mol% of aliphatic dicarboxylic acid and from 20 to 55 mol% of aromatic carboxylic acid such as terephthalic acid or the like, as main components.

The polyamide containing a metaxylylene group or a paraxylylene group may often generate a radical at the benzylmethylene group thereof, and therefore the thermal stability thereof is poor and as compared with that of nylon 6 or the like polyamide. Accordingly, there have heretofore been made a lot of proposals relating to improvement of thermal stability in polymer production or in extrusion molding operation.

For example, for obtaining a polyamide having little gel in the production process thereof, it is important to reduce as much as possible the heat history in the production process of polyamide and to promote the polycondensation so as to rapidly reach the desired molecular weight. For the method of reducing the heat history in the production process of polyamide, it is effective to add a compound having a catalytic effect into the polycondensation system for rapidly promoting the amidation reaction.

As the compound having a catalytic effect for amidation, widely known is a phosphorus atom-containing compound. A method of adding a phosphorus atom-containing compound and an alkali metal compound in polycondensation for polyamide has been proposed in the past (for example, see Patent Document 3). A phosphorus atom-containing compound does not only promote amidation for polyamide but also exhibit the effect of an antioxidant to prevent coloration of polyamide owing to oxygen existing in the polycondensation system, and therefore, when a suitable amount of the compound to be added is selected, it is possible to obtain a polyamide having little gel and excellent in color tone.

CITATION LIST

PATENT LITERATURE

[Patent Document 1] JP-B-54-32458
[Patent Document 2] Japanese Patent No. 3,456,501
[Patent Document 3] JP-A-49-45960

SUMMARY OF THE INVENTION

TECHNICAL PROBLEM

However, in a case of polyamide that contains, as main components thereof, a paraxylylenediamine unit and a linear aliphatic dicarboxylic acid unit having from 6 to 18 carbon atoms, even when sodium hypophosphite that is generally used as a phosphorus atom-containing compound is added in the polycondensation step, the amidation could not be promoted, and therefore, there are some problems in that a long-term reaction is needed for obtaining a high-molecular-weight polyamide therefore bringing about gellation, and the added compound could not be effective as an antioxidant to prevent coloration of polyamide.

A problem to be solved by the present invention is to provide a polyamide resin comprising, as main components thereof, paraxylylenediamine and a linear aliphatic dicarboxylic acid having from 6 to 18 carbon atoms, and having little gel and excellent in color tone.

SOLUTION TO PROBLEM

The present invention relates to the following [1] to [4].

[1] A polyamide resin comprising a diamine unit containing 70 mol% or more of a paraxylylenediamine unit and a dicarboxylic acid unit containing 70 mol% or more of a linear aliphatic dicarboxylic acid unit having from 6 to 18 carbon atoms,
wherein the polyamide resin has a phosphorus atom concentration of from 50 to 1,000 ppm and a YI value of 10 or less in the color difference test in accordance with JIS-K-7105, and is obtainable by a production method which comprises a step of melt polycondensation of a diamine component containing 70 mol% or more of paraxylylenediamine and a dicarboxylic acid component containing 70 mol% or more of a linear aliphatic dicarboxylic acid having from 6 to 18 carbon atoms, in the presence of a phosphorus atom-containing compound (A) which is at least one selected from a group consisting of calcium hypophosphite, magnesium hypophosphite, calcium phosphite, and calcium dihydrogen phosphate.
[2] A polyamide resin composition comprising 100 parts by mass of the polyamide resin according to the above [1] and from 0.01 to 2 parts by mass of a crystal nucleating agent.
[3] A method for producing the polyamide resin according to the above [1], comprising a step of melt polycondensation of a diamine component containing 70 mol% or more of paraxylylenediamine and a dicarboxylic acid component containing 70 mol% or more of a linear aliphatic dicarboxylic acid having from 6 to 18 carbon atoms, in the presence of a phosphorus atom-containing compound (A),
wherein the phosphorus atom-containing compound (A) is at least one selected from a group consisting of calcium hypophosphite, magnesium hypophosphite, calcium phosphite, and calcium dihydrogen phosphate.
[4] A molded article containing the polyamide resin according to the above [1] or the polyamide resin composition according to the above [2].

ADVANTAGEOUS EFFECTS OF INVENTION

The polyamide resin of the present invention contains few gel and has good color tone. In addition, the polyamide resin of the present invention is excellent in various physical properties such as heat resistance, mechanical properties (mechanical strength, toughness, impact resistance), chemical resistance, low water absorbability, moldability, lightweightness, and can be molded into forms of films, sheets, tubes or fibers. Thus, the polyamide resin of the present invention is favorably used for various industrial, engineering and domestic goods. Concretely, the polyamide resin is especially favorably used for various electronic parts and surface-mounding parts that are required to have high heat resistance and low water absorbability, small-size thin-wall molded articles that are required to have high crystallization

speed, high achieving crystallization degree and low water absorbability, automobile parts such as automobile headlight reflectors, engine neighboring parts and the like that are required to have heat resistance and toughness. In addition, the polyamide resin of the present invention is also excellent in sliding properties and is therefore favorably used for various slide members such as bearings, gears, bushes, spacers, rollers, cams. Further, the resin is also excellent in parison characteristics and the temperature dependency of the melt viscosity thereof is small, and therefore the resin is favorable for blow moldings.

DESCRIPTION OF EMBODIMENTS

<Polyamide Resin>

The polyamide resin of the present invention comprises a diamine unit containing 70 mol% or more of a paraxylylenediamine unit and a dicarboxylic acid unit containing 70 mol% or more of a linear aliphatic dicarboxylic acid unit having from 6 to 18 carbon atoms. In this, the diamine unit indicates the constitutive unit derived from a starting diamine component, and the dicarboxylic acid unit indicates the constitutive unit derived from a starting dicarboxylic acid component.

The amount of the paraxylylenediamine unit in the diamine unit is preferably 80 mol% or more, more preferably 90 mol% or more, most preferably 100 mol%. The amount of the linear aliphatic dicarboxylic acid unit having from 6 to 18 carbon atoms in the dicarboxylic acid unit is preferably 80 mol% or more, more preferably 90 mol% or more, most preferably 100 mol%.

The polyamide resin of the present invention can be obtained by polycondensation of a diamine component containing 70 mol% or more of a paraxylylenediamine and a dicarboxylic acid component containing 70 mol% or more of a linear aliphatic dicarboxylic acid having from 6 to 18 carbon atoms, in the presence of a specific phosphorus atom-containing compound.

The starting diamine component of the polyamide resin of the present invention contains paraxylylenediamine in an amount of 70 mol% or more, preferably 80 mol% or more, more preferably 90 mol% or more, particularly preferably 100 mol%. When the amount of paraxylylenediamine in the diamine component is 70 mol% or more, then the obtained polyamide resin can have a high melting point and a high crystallinity, and therefore the obtained polyamide resin can be favorably used in various applications as a polyamide resin being excellent in parison characteristics, heat resistance, chemical resistance and the like, and having low water absorbability. In case where the paraxylylenediamine concentration in the starting diamine component is less than 70 mol%, the heat resistance and the chemical resistance of the resin lowers and the water absorbability thereof increases.

Examples of the other starting diamine component than paraxylylenediamine include aliphatic diamines such as 1,4-butanediamine, 1,6-hexanediamine, 1,8-octanediamine, 1,10-decanediamine, 1,12-dodecanediamine, 2-methyl-1,5-pentanediamine, 2,2,4-trimethyl-1,6-hexanediamine, 2,4,4-trimethyl-1,6-hexanediamine, 2-methyl-1,8-octanediamine, 5-methyl-1,9-nonanediamine; alicyclic diamines such as 1,3-bis(aminomethyl)cyclohexane, 1,4-bis(aminomethyl)cyclohexane, cyclohexanediamine, methylcyclohexanediamine, isophoronediamine; and their mixtures, to which, however, the present invention should not be limited.

The starting dicarboxylic acid component of the polyamide resin of the present invention contains a linear aliphatic dicarboxylic acid having from 6 to 18 carbon atoms in an amount of 70 mol% or more, preferably 80 mol% or more, more preferably 90 mol% or more, particularly preferably 100 mol%. When the amount of the linear aliphatic dicarboxylic acid having from 6 to 18 carbon atoms is 70 mol% or more, then the obtained polyamide resin can have flowability in melt working thereof, and can have high crystallinity and low water absorbability, and therefore the obtained polyamide resin can be favorably used in various applications as a polyamide resin being excellent in heat resistance, chemical resistance, moldability and dimensional stability. In case where the concentration of the linear aliphatic dicarboxylic acid having from 6 to 18 carbon atoms in the starting dicarboxylic acid component is less than 70 mol%, the heat resistance, the chemical resistance and the moldability of the resin lowers.

Examples of the linear aliphatic dicarboxylic acid having from 6 to 18 carbon atoms include adipic acid, pimelic acid, suberic acid, azelaic acid, sebacic acid, undecane-diacid, dodecane-diacid, tridecane-diacid, tetradecane-diacid, pentadecane-diacid, hexadecane-diacid and the like. Above all, preferred is at least one selected from a group consisting of adipic acid, azelaic acid, sebacic acid, undecane-diacid and dodecane-diacid; more preferred is sebacic acid and/or azelaic acid. An aliphatic dicarboxylic acid having 5 or less carbon atoms has a low melting point and a low boiling point, and may therefore distill out of the reaction system during polycondensation reaction to thereby disrupt the reaction molar ratio of the diamine and the dicarboxylic acid, and the mechanical properties and the thermal stability of the obtained polyamide may be thereby worsened. An aliphatic dicarboxylic acid having 19 or more carbon atoms greatly lowers the melting point of the polyamide resin and the resin could no more have heat resistance.

Examples of the other starting dicarboxylic acid than the linear aliphatic dicarboxylic acid having from 6 to 18 carbon atoms include malonic acid, succinic acid, 2-methyladipic acid, trimethyladipic acid, 2,2-dimethylglutaric acid,

2,4-dimethylglutaric acid, 3,3-dimethylglutaric acid, 3,3-diethylsuccinic acid, 1,3-cyclopentanedicarboxylic acid, 1,3-cyclohexanedicarboxylic acid, 1,4-cyclohexanedicarboxylic acid, isophthalic acid, terephthalic acid, 2,6-naphthalenedicarboxylic acid, 1,5-naphthalenedicarboxylic acid, 1,4-naphthalenedicarboxylic acid, 2,7-naphthalenedicarboxylic acid, and their mixtures, to which, however, the present invention should not be limited.

Except the above-mentioned diamine component and the dicarboxylic acid component, lactams such as ε-caprolactam, laurolactam; aliphatic aminocarboxylic acids such as aminocaproic acid, aminoundecanoic acid, can also be used as the copolymerization component to constitute the polyamide resin, within a range not detracting from the advantage of the present invention.

As a molecular weight regulating agent in polycondensation to produce the polyamide resin of the present invention, a small amount of a monofunctional compound having reactivity with the terminal amino group or carboxyl group of polyamide may be added. Examples of the usable compound include aliphatic monocarboxylic acids such as acetic acid, propionic acid, butyric acid, valeric acid, caproic acid, caprylic acid, lauric acid, tridecylic acid, myristic acid, palmitic acid, stearic acid, pivalic acid; aromatic monocarboxylic acids such as benzoic acid, toluic acid, naphthalenecarboxylic acid; aliphatic monoamines such as butylamine, amylamine, isoamylamine, hexylamine, heptylamine, octylamine; aromatic monoamines such as benzylamine, methylbenzylamine; and their mixtures, to which, however, the present invention should not be limited.

In case where the molecular weight regulating agent is used in polycondensation to produce the polyamide resin of the present invention, the preferred amount thereof to be used may vary depending on the reactivity and the boiling point of the molecular weight regulating agent to be used, reaction condition or the like, but is, in general, from 0.1 to 10% by mass or so of the total of the starting diamine component and dicarboxylic acid component.

When a phosphorus atom-containing compound is added to the polycondensation system to produce polyamide, the compound acts as a catalyst for polycondensation reaction and prevents coloration of polyamide owing to oxygen existing in the polycondensation system. In the present invention, in the production process of polyamide that comprises, as main components, a paraxylylenediamine unit and a linear aliphatic dicarboxylic acid unit having from 6 to 18 carbon atoms, the polycondensation is attained in the presence of a specific phosphorus atom-containing compound thereby producing a polyamide free from gellation and coloration and having a good outward appearance.

The phosphorus atom-containing compound (A) to be added to the polycondensation system for the polyamide of the present invention is preferably such that the temperature at which decomposition reaction except dehydrating condensation occurs is (melting point of the resin composition - 20°C) or more, more preferably (melting point of the resin composition -10°C) or more, particularly preferably the melting point or more of the resin composition. When a phosphorus atom-containing compound of such that the temperature at which decomposition reaction occurs is (melting point of the resin composition - 20°C) or more is added, then the compound can suitably exhibit the catalytic effect thereof in polycondensation reaction and can suitably exhibit the effect thereof as an antioxidant for preventing coloration of polyamide owing to oxygen existing in the polycondensation system.

The phosphorus atom-containing compound (A) is at least one selected from the group consisting of calcium hypophosphite, magnesium hypophosphite, calcium phosphite, calcium dihydrogen phosphate; preferred is calcium hypophosphite. The phosphorus atom-containing compound (A) may be a hydrate.

The amount of the phosphorus atom-containing compound (A) to be added to the polycondensation system for the polyamide resin of the present invention is such that the phosphorus atom concentration in the polyamide resin composition could be from 50 to 1,000 ppm, preferably from 50 to 400 ppm, more preferably from 60 to 350 ppm, particularly preferably from 70 to 300 ppm. When the phosphorus atom concentration in the resin composition is less than 50 ppm, the compound could not fully exhibit the effect thereof as an antioxidant and the polyamide resin composition may thereby color. In case where the phosphorus atom concentration in the resin composition is more than 1,000 ppm, the gellation of the polyamide resin composition may be promoted and impurities that may be caused by the phosphorus atom-containing compound (A) may remain in the molded articles, and the outward appearance of the molded articles may thereby worsen.

Preferably, a polymerization speed regulating agent (B) is added to the polycondensation system for the polyamide resin of the present invention along with the phosphorus atom-containing compound (A) added thereto. For preventing the coloration of polyamide in polycondensation, a sufficient amount of the phosphorus atom-containing compound (A) must be added to the system, which, however, may cause gellation of polyamide; and therefore, for controlling the amidation reaction speed, a polymerization speed regulating agent (B) is preferably added to the reaction system.

The polymerization speed regulating agent (B) includes alkali metal hydroxides, alkaline earth metal hydroxides, alkali metal acetates and alkaline earth metal acetates, and preferred are alkali metal hydroxides and alkali metal acetates. As the polymerization speed regulating agent (B) usable in the present invention, there may be mentioned lithium hydroxide, sodium hydroxide, potassium hydroxide, rubidium hydroxide, cesium hydroxide, magnesium hydroxide, calcium hydroxide, strontium hydroxide, barium hydroxide, lithium acetate, sodium acetate, potassium acetate, rubidium acetate, cesium acetate, magnesium acetate, calcium acetate, strontium acetate, barium acetate, and their mixtures. Of those, preferred are sodium hydroxide, potassium hydroxide, magnesium hydroxide, calcium hydroxide,

sodium acetate, potassium acetate; more preferred are sodium hydroxide, sodium acetate, potassium acetate.

In case where the polymerization speed regulating agent (B) is added to the polycondensation system, the molar ratio of the polymerization speed regulating agent (B) to the phosphorus atom of the phosphorus atom-containing compound (A) (= [molar amount of polymerization speed regulating agent (B)]/[molar amount of phosphorus atom of phosphorus atom-containing compound (A)]) (hereinafter referred to as ratio (B)/(A)) is preferably so controlled as to be from 0.3 to 1.0, more preferably from 0.4 to 0.95, particularly preferably from 0.5 to 0.9, from the viewpoint of the balance of promotion and retardation of the amidation.

For polymerization to produce the polyamide resin of the present invention, herein employable is any method of (a) polycondensation in a molten state, (b) polycondensation in a molten state to give a low-molecular-weight polyamide followed by solid-phase polymerization of heat treatment thereof in a solid phase state, (c) polycondensation in a molten state to give a low-molecular-weight polyamide followed by extrusion polymerization of increasing the molecular weight of the polyamide through additional polymerization thereof in a molten state using a kneading extruder, and the like.

The polycondensation method in a molten state is not specifically defined. For example, there may be mentioned a polycondensation method of heating under pressure an aqueous solution of a nylon salt of a diamine component and a dicarboxylic acid component for polycondensation thereof in a molten state with removing water and condensation water; and a method of polycondensation comprising adding a diamine component directly to a dicarboxylic acid in a molten state followed by polycondensing them under normal pressure or in a water vapor-pressurized atmosphere. In case where a diamine is directly added to a dicarboxylic acid in a molten state for polymerization, the diamine component may be continuously added to the molten dicarboxylic acid phase for the purpose of keeping the reaction system in a uniform liquid condition, and the polycondensation may be attained with controlling the reaction temperature so as not to be lower than the melting point of the formed oligoamide and polyamide. In obtaining products according to the above-mentioned polycondensation method, triethylene glycol, ethylene glycol, metaxylylenediamine or the like may be used for washing the inside of the apparatus in changing the variety of the products to be produced.

The polyamide resin obtained through melt polycondensation is once taken out, then pelletized and dried before use. For further increasing the degree of polymerization thereof, the resin may be solid-phase polymerized. As the heating apparatus to be used for drying or solid-phase polymerization, preferred is a continuous heating and drying apparatus, as well as a rotary drum-type heating apparatus such as a tumble drier, a conical drier, a rotary drier or the like, or a conical heating apparatus equipped with a rotary blade inside it, such as a Nauta mixer, to which, however, the present invention should not be limited. In the present invention, any other known method and apparatus are usable. In particular, for solid-phase polymerization of polyamide, preferred is use of a rotary drum-type heating apparatus among those mentioned above, since in the apparatus, the system may be airtightly closed and the polycondensation can be readily attained with removing oxygen that may cause coloration.

The polyamide resin of the present invention colors little and gels little. In addition, the polyamide resin of the present invention has a YI value in the color difference test in accordance with JIS-K-7105 of 10 or less, preferably 6 or less, more preferably 5 or less, particularly preferably 1 or less. Polyamide of which the YI value is more than 10 is unfavorable as giving yellowish molded articles in subsequent molding, and the commercial value of the articles is low.

There are known some indices for the degree of polymerization of polyamide resin, and relative viscosity is one generally used in the art. The relative viscosity of the polyamide resin of the present invention is preferably from 1.8 to 4.2, more preferably from 1.9 to 3.5, particularly preferably from 2.0 to 3.0, from the viewpoint of the outward appearance of the molded articles and the moldability thereof. The relative viscosity as referred to herein is the ratio of the dropping time (t) of the solution prepared by dissolving 1 g of polyamide in 100 mL of 96% sulfuric acid, as measured with a Cannon-Fenske viscometer at 25°C, to the dropping time (t0) of 96% sulfuric acid alone measured in the same manner, and is represented by the following formula (1):

$$\text{Relative Viscosity} = t/t0 \qquad (1)$$

Preferably, the polyamide has a number-average molecular weight (Mn), as measured through gel permeation chromatography (GPC), of from 10,000 to 50,000, more preferably from 12,000 to 40,000, particularly preferably from 14,000 to 30,000. When Mn falls within the above range, the mechanical strength of the molded articles of the resin may be stable, and from the viewpoint of the moldability thereof, the resin may have a suitable melt viscosity favorable for molding.

Also preferably, the degree of dispersion (weight-average molecular weight/number-average molecular weight = Mw/Mn) of the resin falls within a range of from 1.5 to 5.0, more preferably from 1.5 to 3.5. When the degree of dispersion falls within the above range, the flowability and the stability of the melt viscosity of the resin in melting may be better and the workability for melt kneading or melt molding thereof may be therefore bettered. In addition, the toughness of the resin is good, and other various properties such as the water absorption resistance, the chemical

resistance and the thermal aging resistance thereof may also be good.

<Polyamide Resin Composition>

Various additives generally used in polymer materials may be incorporated in the polyamide resin of the present invention, within a range not detracting from the effect of the present invention, in accordance with the properties needed for the polyamide resin of the present invention, thereby providing a polyamide resin composition. Specific examples of the additives include antioxidant, colorant, light stabilizer, delustering agent, heat stabilizer, weather-resistant stabilizer, UV absorbent, crystal nucleating agent, plasticizer, filler such as nanofiller, flame retardant, lubricant, antistatic agent, coloration inhibitor, gellation inhibitor, mold release agent and the like. Not limited to these, various materials may be incorporated in the resin.

(Antioxidant)

Examples of the antioxidant include copper-based antioxidants, hindered phenol-based antioxidants, hindered amine-based antioxidants, phosphorus-based antioxidants, thio-based antioxidants and the like.

(Crystal Nucleating Agent)

In case where the polyamide resin-containing resin composition of the present invention is a resin composition for surface-mounting parts, the composition preferably contains a crystal nucleating agent as the additive thereto. The crystal nucleating agent may be any compound generally used as a crystal nucleating agent for polyamide resin.

The crystal nucleating agent includes metal oxides, inorganic acid metal salts, organic acid metal salts, clays and the like. The metal oxide includes zinc oxide, magnesium oxide, iron oxide, antimony oxide, alumina, silica, titanium oxide and the like. The inorganic acid metal salt includes sodium carbonate, potassium carbonate, calcium carbonate, zinc carbonate, magnesium carbonate, calcium silicate, lead silicate, magnesium silicate, calcium phosphate, lead phosphate, calcium sulfate, barium sulfate and the like. The organic acid metal salt includes sulfonates, salicylates, stearates, benzoates, oxalates, tartrates and the like. The clay includes talc, mica, kaolin, carbon powder, gypsum and the like.

Not specifically defined, the amount of the crystal nucleating agent to be added may be any one falling within a range not detracting the properties of the resin composition. Preferably, the total amount of the crystal nucleating agent to be added is from 0.01 to 2 parts by mass relative to 100 parts by mass of polyamide, more preferably from 0.02 to 1.0 part by mass. When the amount to be added falls within the range, the additive may enhance the heat resistance and the water absorption resistance of the resin composition not having any negative influence on the mechanical properties of the composition.

(Filler)

As the filler, herein usable is any one having different morphology, such as powder, fibrous or cloth-like fillers.

Examples of the powdery filler include silica, alumina, titanium oxide, zinc oxide, boron nitride, talc, mica, potassium titanate, calcium silicate, calcium carbonate, barium sulfate, magnesium sulfate, aluminium borate, asbestos, glass beads, glass flakes, montmorillonite, kaolin, phyllosilicates such as swellable fluoromica-based minerals, clay, gypsum, carbon black, graphite, molybdenum disulfide, polytetrafluoroethylene and the like.

The fibrous filler includes organic and inorganic fibrous fillers. Examples of the organic fibrous filler include wholly aromatic polyamide fibers (aramide fibers) such as fibers obtained from polyparaphenylene-terephthalamide resin, polymetaphenylene-terephthalamide resin, polyparaphenylene-isophthalamide resin, polymetaphenylene-isophthalamide resin, condensate of diaminodiphenyl ether and terephthalic acid or isophthalic acid; as well as wholly aromatic liquid-crystal polyester fibers, cellulose fibers and the like. Examples of the inorganic fibrous filler include glass fibers, carbon fibers, boron fibers and the like. These fibrous fillers may be secondary-worked into cloth-like fillers or the like. In addition, there may be further mentioned metal fibers of steel, SUS, brass, copper or the like; whiskers, needle-like crystals and others of inorganic compound such as potassium titanate, aluminium borate, gypsum, calcium carbonate, magnesium sulfate, sepiolite, xonotlite, wollastonite.

The filler may be surface-treated with a silane coupling agent, a titanium coupling agent or the like for use herein. Use of the filler surface-treated with such a coupling agent is preferred as bettering the mechanical properties of the obtained molded articles. As the silane coupling agent, especially preferred is an aminosilane-type coupling agent.

One or more different types of these fillers may be used as combined. Combined use of the above-mentioned powder filler and the above-mentioned fibrous filler provides a polyamide resin composition excellent in moldability, surface beautifulness, mechanical properties and heat resistance.

In case where the polyamide resin-containing resin composition of the present invention is a resin composition for slide members, preferred is use of glass fibers, carbon fibers, and whiskers or needle-like crystals of inorganic compounds among the above, in the composition. The fibrous filler may be surface-treated for the purpose of enhancing the adhesiveness thereto to resin, and may be treated with a converging agent for bettering the handlability of the composition and for converging it. Except the fibrous filler, any other amorphous or non-whisker filler having a low aspect ratio and therefore not having a reinforcing effect can also be used along with the filler as above for bettering the molding accuracy and the surface smoothness of the molded articles.
Not specifically defined, the content of the filler may be within a range not detracting from the properties of the resin composition. From the viewpoint of the moldability, the mechanical properties, the thermal deformation resistance and the like, the filler content in the resin composition is preferably from 1 to 200 parts by mass relative to 100 parts by mass of the resin therein, more preferably from 1 to 150 parts by mass, particularly preferably from 2 to 100 parts by mass.

(Flame Retardant)

Examples of the flame retardant include bromopolymers, antimony oxide, metal hydroxides and the like.

(Lubricant)

As the lubricant, a solid lubricant is usable here. Specific examples of the solid lubricant include powders of fluororesins such as polytetrafluoroethylene (PTFE), tetrafluoroethylene-ethylene copolymer; polyolefin resins such as polyethylene; graphite, carbon black, molybdenum disulfide, molybdenum trioxide; wholly aromatic polyamide resins such as aramide resins; silicone, copper lead alloy, tungsten disulfide, calcium sulfate, magnesium sulfate, boron nitride; and their mixtures, to which, however, the present invention should not be limited.
In case where the polyamide resin-containing resin composition of the present invention is a resin composition for slide members, preferred is use therein of fluororesins, graphite, molybdenum disulfide, electroconductive or pigment-use granular carbon black, aramide resins and boron nitride among the above, and more preferred are fluororesins, electroconductive or pigment-use granular carbon black and graphite. As the fluororesin, especially preferred is polytetrafluoroethylene.
As examples of the mold release agent, concretely mentioned are long-chain alcohol fatty acid esters, branched alcohol fatty acid esters, glycerides, polyalcohol fatty acid esters, polymer complex esters, higher alcohols, ketone waxes, montan wax, silicone oils, silicone gums, and their mixtures, to which, however, the present invention should not be limited.
In case where the polyamide resin-containing resin composition of the present invention is a resin composition for slide members or for blow moldings, the resin composition preferably contains a mold release agent for bettering the mold releasability during molding. In case where the polyamide resin-containing resin composition of the present invention is a resin composition for slide members, a relatively large amount of the mold release agent is preferably added thereto in order that the agent could be effective also for bettering the slidability of the members.
Not specifically defined, the amount of the mold release agent to be added may be within a range not detracting from the properties of the resin composition. In general, the amount is preferably from 0.01 to 5 parts by mass relative to 100 parts by mass of polyamide, more preferably from 0.1 to 2 parts by mass. In case where the polyamide resin-containing resin composition of the present invention is a resin composition for slide members, the amount is preferably from 0.05 to 7 parts by mass relative to 100 parts by mass of polyamide, more preferably from 0.5 to 5 parts by mass. In case where the polyamide resin-containing resin composition of the present invention is a resin composition for blow moldings, the amount is preferably from 0.1 to 2 parts by mass relative to 100 parts by mass of polyamide, more preferably from 0.01 to 5 parts by mass.
To the polyamide resin of the present invention, any other polymer or the like may be further added. In addition, a high-melting-point polymer such as nylon 6T, nylon 22 or the like may also be used; and two or more different types of those may be used here as combined.
In addition, a heat-resistant thermoplastic resin or a modified derivative of the resin, such as PPE (polyphenyl ether), polyphenylene sulfide, modified polyolefin, PES (polyether sulfone), PEI (polyether imide), LCP (liquid-crystal polymer), molten liquid-crystal polymer or the like may be incorporated in the polyamide resin-containing polyamide resin composition of the present invention, within a range not detracting from the effect of the present invention.

(Polyphenylene Sulfide)

The polyphenylene sulfide that may be incorporated in the polyamide resin-containing resin composition of the present invention is a polymer that has a constitutive unit represented by the following formula (I) preferably in an amount of 70 mol% or more of all the constitutive units therein, more preferably 90 mol% or more.

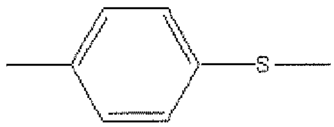

(I)

The polyphenylene sulfide that may be incorporated in the polyamide resin-containing resin composition of the present invention includes, in addition to the polymer having the constitutive unit represented by the above-mentioned formula (I) alone, other polymers containing one or more constitutive units represented by the following formulae (II) to (VI):

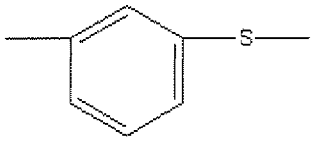

(II)

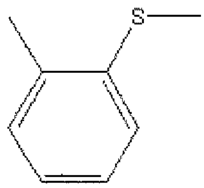

(III)

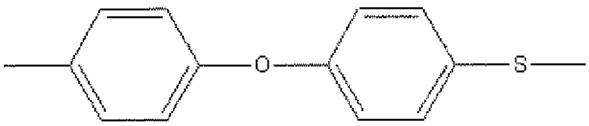

(IV)

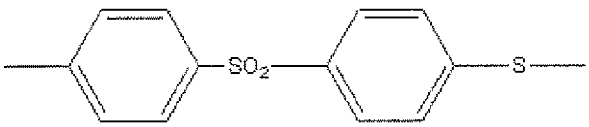

(V)

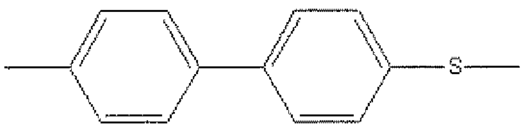

(VI)

The polyphenylene sulfide may further contain a trifunctional structural unit represented by the following formula (VII) in an amount of 10 mol% or less of all the constitutive units.

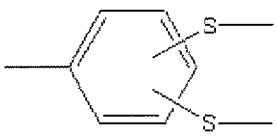

(VII)

The constitutive units represented by the above-mentioned formulae (I) to (VII) may have a substituent such as an alkyl group, a nitro group, a phenyl group, an alkoxyl group, in the aromatic ring thereof.

Preferably, the polyphenylene sulfide that may be incorporated into the polyamide resin-containing resin composition of the present invention has a viscosity, as measured with a flow tester under a load of 20 kg and at a temperature of 300°C, of from 100 to 10,000 poises, more preferably from 200 to 5,000 poises, particularly preferably from 300 to 3,000 poises. The polyphenylene sulfide may be prepared in any desired method.

In the polyamide resin-containing resin composition of the present invention, the ratio by mass of the polyamide resin of the present invention to the above-mentioned polyphenylene sulfide is preferably from 5/95 to 99.9/0.1, more preferably from 5/95 to 95/5, particularly preferably from 20/80 to 80/20, from the viewpoint of the heat resistance of the

resin.

(Modified Polyolefin)

As the modified polyolefin, herein usable is one prepared by modifying a polyolefin through copolymerization with an α,β-unsaturated carboxylic acid or its ester or metal salt derivative, or by modifying a polyolefin through grafting introduction thereinto of a carboxylic acid, an acid anhydride or the like. Concretely, there may be mentioned ethylene/propylene copolymer, ethylene/1-butene copolymer, ethylene/4-methyl-1-pentene copolymer, ethylene/1-hexene copolymer, ethylene/1-octene copolymer, ethylene/1-decene copolymer, propylene/ethylene copolymer, propylene/1-butene copolymer, propylene/4-methyl-l-pentene copolymer, propylene/1-hexane copolymer, propylene/1-octene copolymer, propylene/1-decene copolymer, propylene/1-dodecene copolymer, ethylene/propylene/l,4-hexadiene copolymer, ethylene/propylene/dicyclopentadiene copolymer, ethylene/1-butene/1,4-hexadiene copolymer, ethylene/1-butene/5-ethylidene-2-norbomene copolymer and the like, to which, however, the invention should not be limited.

In the polyamide resin-containing resin composition of the present invention, the amount of the modified polyolefin to be incorporated preferably in an amount of from 0.5 to 50 parts by mass relative to 100 parts by mass of polyamide, more preferably from 1 to 45 parts by mass, particularly preferably from 5 to 40 parts by mass, from the viewpoint of the mechanical strength, the impact resistance, the heat resistance and the like of the resin.

(Molten Liquid-Crystal Polymer)

The molten liquid-crystal polymer has the property of forming a liquid crystal in a molten phase (that is, showing optical anisotropy), and preferably has an intrinsic viscosity [η], as measured in pentafluorophenol at 60°C, of from 0.1 to 5 dl/g.

Typical examples of the molten liquid-crystal polymer include a polyester substantially comprising an aromatic hydroxycarboxylic acid unit; a polyester substantially comprising an aromatic hydroxycarboxylic acid unit, an aromatic dicarboxylic acid unit and an aromatic diol unit; a polyester substantially comprising an aromatic hydroxycarboxylic acid unit, an aromatic dicarboxylic acid unit and an aliphatic diol unit; a polyesteramide substantially comprising an aromatic hydroxycarboxylic acid unit and an aromatic aminocarboxylic acid unit; a polyesteramide substantially comprising an aromatic hydroxycarboxylic acid unit, an aromatic dicarboxylic acid unit and an aromatic diamine unit; a polyesteramide substantially comprising an aromatic hydroxycarboxylic acid unit, an aromatic aminocarboxylic acid unit, an aromatic dicarboxylic acid unit and an aromatic diol unit; a polyester amide substantially comprising an aromatic hydroxycarboxylic acid unit, an aromatic aminocarboxylic acid unit, an aromatic dicarboxylic acid unit and an aliphatic diol unit, to which, however, the present invention should not be limited.

Examples of the aromatic hydroxycarboxylic acid unit constituting the molten liquid-crystal polymer include, for example, units derived from p-hydroxybenzoic acid, m-hydroxybenzoic acid, 6-hydroxy-2-naphthoic acid, 7-hydroxy-2-naphthoic acid.

Examples of the aromatic dicarboxylic acid unit include, for example, units derived from terephthalic acid, isophthalic acid, chlorobenzoic acid, 4,4'-biphenyldicarboxylic acid, 2,6-naphthalenedicarboxylic acid, 2,7-naphthalenedicarboxylic acid, 4,4'-oxydibenzoic acid, diphenylmethane-4,4'-dicarboxylic acid, diphenylsulfone-4,4'-dicarboxylic acid.

Examples of the aromatic diol acid unit include, for example, units derived from hydroquinone, resorcinol, methylhydroquinone, chlorohydroquinone, phenylhydroquinone, 4,4'-dihydroxybiphonyl, 2,6-dihydroxynaphthalene, 2,7-dihydroxynaphthalene, 4,4'-dihydroxybiphenyl ether, 4,4'-dihydroxybiphenylmethane, 4,4'-dihydroxybiphenyl sulfone.

Examples of the aliphatic diol acid unit include, for example, units derived from ethylene glycol, propylene glycol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol.

Examples of the aromatic aminocarboxylic acid unit include, for example, units derived from p-aminobenzoic acid, m-aminobenzoic acid, 6-amino-2-naphthoic acid, 7-amino-2-naphthoic acid.

Examples of the aromatic diamine unit include, for example, units derived from p-phenylenediamine, m-phenylenediamine, 4,4'-diaminobiphenyl, 2,6-diaminonaphthalene, 2,7-diaminonaphthalene.

Preferred examples of the molten liquid-crystal polymer include, for example, a polyester comprising p-hydroxybenzoic acid unit and 6-hydroxy-2-naphthoic acid unit; a polyester comprising p-hydroxybenzoic acid unit, 4,4'-dihydroxybiphenyl unit and terephthalic acid unit; a polyester comprising p-hydroxybenzoic acid unit, ethylene glycol unit and terephthalic acid unit; a polyester amide comprising p-hydroxybenzoic acid unit, 6-hydroxy-2-naphthoic acid unit and p-aminobenzoic acid unit.

In the polyamide resin-containing resin composition of the present invention, the amount of the molted liquid-crystal polymer to be incorporated is preferably from 0.1 to 200 parts by mass relative to 100 parts by mass of polyamide,

more preferably from 0.5 to 150 parts by mass, particularly preferably from 1 to 100 parts by mass, from the viewpoint of the moldability of the resin composition and the dimensional stability, the chemical resistance and the like of the molded articles.

The method of incorporating additives and other resins into the polyamide resin is not specifically defined, for which employable is any desired method. For example, the additives may be added to the polyamide resin in polycondensation to produce the resin, or a predetermined amount of additive and other resin may be incorporated in the polyamide resin followed by melt-kneading or dry-blending them.

Any conventional known method may be employable for melt kneading. For example, there may be mentioned a method of melt-kneading the components under heat, using a single-screw or double-screw extruder, a kneader, a mixing roll, a Banbury mixer, a vent extruder or the like apparatus. All the materials may be put into the extruder from its bottom all at a time, and then melt-kneaded therein. Another method is also employable where the resin component is first put into the apparatus, and while melted, this is melt-kneaded with fibrous filler as side-fed thereto, and the mixture is pelletized. Still another method is also employable where different types of compounded materials are first pelletized, and the resulting pellets are blended, or some powdery component or liquid component may be separately blended with them.

<Molded Article>

The polyamide resin and the resin composition containing the resin of the present invention may be formed into molded articles having a desired shape, according to a known molding method of injection molding, blow molding, extrusion molding, compression molding, stretching, vacuum molding or the like. The resin and the resin composition can be molded not only as molded articles of engineering plastics but also as films, sheets, hollow containers, fibers, tubes and other forms of molded articles, and are favorably used for industrial materials, engineering materials, domestic articles and the like.

The molded articles comprising the polyamide resin or the resin composition containing the resin of the present invention are favorably used in various applications of electric/electronic parts, slide members, blow moldings, automobile parts and the like.

Specific examples of electric/electronic parts include connectors, switches, IC and LED housings, sockets, relays, resistors, condensers, capacitors, coil bobbins and other electric/electronic parts to be mounted on printed boards.

Specific examples of slide members include bearings, gears, bushes, spacers, rollers, cams and other various slide members.

Specific examples of automobile parts include engine mounts, engine covers, torque control levers, window regulators, front lamp reflectors, door mirror stays.

EXAMPLES

The present invention is described in more detail with reference to the following Examples and Comparative Examples; however, the present invention should not be limited to these Examples. In the Examples, the samples were analyzed and measured according to the following methods.

(1) Relative viscosity of polyamide:

1 g of polyamide was accurately weighed, and dissolved in 100 ml of 96% sulfuric acid at 20 to 30°C with stirring. After completely dissolved, 5 ml of the solution was rapidly taken into a Cannon-Fenske viscometer, left in a thermostat at 25°C for 10 minutes, and the dropping time (t) thereof was measured. In addition, the dropping time (t0) of 96% sulfuric acid was also measured in the same manner. From t and t0, the relative viscosity of the polyamide was calculated according to the following formula (1):

$$\text{Relative Viscosity} = t/t0 \qquad (1)$$

(2) YI value of polyamide pellets:

In accordance with JIS-K-7105, the YI value was measured in a reflection method. The pellets having a higher YI value are considered as yellowed more. As the device for measuring the YI value, used was Color Difference Meter (Model, Z-∑80, Color Measuring System) manufactured by Nippon Denshoku Industries Co., Ltd.

(3) Phosphorus atom concentration:

The phosphorus atom concentration was measured through fluorescence X-ray analysis. As the measuring device, used was ZSX primus (trade name) manufactured by Rigaku Corporation. The condition for analysis was as follows: Tube, Rh 4 kW; atmosphere, vacuum; analysis window, polyester film 5 μm; measurement mode, EZ scan; measurement diameter, 30 mmϕ. The data computation was SQX computation with software manufactured by Rigaku Corporation.

(4) Terminal amino group concentration and Terminal carboxyl group concentration of polyamide:

Terminal amino group concentration ([NH2] μeq/g):

From 0.05 to 0.5 g of polyamide was accurately weighed, and dissolved in 30 ml of phenol/ethanol = 4/1 (by volume) at 20 to 50°C with stirring. After completely dissolved, the solution was subjected to neutralization titration with an aqueous solution of N/100 hydrochloric acid with stirring, thereby determine the terminal amino group concentration of the polyamide.

Terminal carboxyl group concentration ([COOH] μeq/g):

From 0.05 to 0.5 g of polyamide was accurately weighed, and dissolved in 30 ml of benzyl alcohol in a nitrogen current atmosphere at 160 to 180°C with stirring. After completely dissolved, the solution was cooled to 80°C or lower in the nitrogen current atmosphere, 10 ml of methanol was added thereto with stirring, and the solution was subjected to neutralization titration with an aqueous solution of N/100 sodium hydroxide, thereby determine the terminal carboxyl group concentration of the polyamide.

(5) Gel permeation chromatography (GPC):

GPC was carried out with Shodex GPC SYSTEM-11 (trade name) manufactured by Showa Denko K.K. As the solvent, used was hexafluoroisopropanol (HFIP). 10 mg of a polyamide sample was dissolved in 10 g of HFIP and used for the measurement. Regarding the measurement condition, two measurement columns of GPC Standard Column (column size, 300 x 8.0 mm I.D.), HFIP-806M (trade name) manufactured by Showa Denko K.K., and two reference columns HFIP-800 (trade name) manufactured by Showa Denko K.K. were used; the column temperature was 40°C, the solvent flow rate was 1.0 mL/min. As the standard sample, used was pMMA (methyl polymethacrylate); and as the data-processing software, SIC-480II (trade name) manufactured by Showa Denko K.K. was used to determine the number-average molecular weight (Mn) and the weight-average molecular weight (Mw).

(6) DSC (differential scanning colorimetry):

The melting point, the crystallization point and the quantity of thawing and crystallization heat of the sample were measured in accordance with JIS K-7121, K-7122. As the apparatus, used was DSC-60 (trade name) manufactured by Shimadzu Corporation.

(7) Melt viscosity, Melt viscosity retention:

As the measuring device, used was Capillograph D-1 (trade name) manufactured by Toyo Seiki Seisaku-sho, Ltd. Regarding the measurement condition, the die length size was 1 mmϕ x 10 mm length, the apparent shearing speed was 100/sec, the measurement temperature was 300°C, and the sample water content was 1,000 ppm or less.

Regarding the temperature dependence of the melt viscosity, the viscosity of the sample was measured at (melting point of resin + 10°C) and at (melting point thereof + 20°C), using the device mentioned below.

Measuring Device: Rheometer ARES (trade name, manufactured by Rheometric Scientific, Inc.)
Plates: parallel plates (upper plate, 25 mm; lower plate, 40 mm)
Gap length: 0.5 mm
Sample amount: 400 mg
Measurement frequency: 10 rad/s

(8) Mechanical properties of molded article:

Using an injection molding machine (Fanuc 100α, trade name, manufactured by FANUC Corporation), the sample was melted at a temperature higher by 20°C than the melting point thereof, and injection-molded under an injection pressure of 600 $kgf/cm^2$ for an injection time of 1.0 second at a mold temperature of 120°C, thereby producing the injection-molded pieces as in Table 1. Thus obtained, the injection-molded pieces were annealed in a hot air drier at 160°C for 1 hour, and then tested as in Table 1, under an absolute dry condition.

Table 1

| Test Item | Test Method | Test Piece Size |
|---|---|---|
| Tensile Strength | JIS K-7113 (in accordance with ISO 527) | JIS No. 1 Dumbbell, 3 mm thick (ISO 3167 dumbbell piece) |
| Modulus of Tensile Elasticity | Ditto | Ditto |
| Tensile Elongation | Ditto | Ditto |
| Deflection Temperature under load | Method A: in accordance with ASTM D648; load, 18.6 $kgf/cm^2$ | 127 x 12.7 x 6.4 mm |
| | Method B: in accordance with ISO 75 | 80 x 10 x 4 mm |
| Impact Strength | In accordance with ISO 179 | 80 x 10 x 4mm |

(9) Water absorption property:

A disc-type test piece having a diameter of 50 mm (about 2 inches) and a thickness of 3 mm, produced with an injection-molding machine under the same condition as in the above (8) was analyzed to measure the mass thereof in an absolute dry condition, and then this was dipped in normal-pressure boiling water, and the mass change thereof with time was measured. The water absorption at the time at which no mas change was found was taken as an equilibrium water absorption. In addition, the tensile test piece produced in the above (8) was dipped in boiling water under the same condition as above, and then tested for the tensile strength thereof. The strength retention and the elasticity retention of the sample from the absolute dry condition thereof were determined.

(10) Soldering heat resistance:

A test piece was dipped in a solder heated at 260°C for 10 seconds, and the thus-dipped test piece was checked for the deformation and the surface condition and evaluated under the following standards.

A: The test piece did not deform at all, and the surface condition of the test piece did not change.

B: The test piece melted and deformed, or the surface of the test piece had damage by swelling.

(11) Slidability:

Using a Suzuki-type sliding test machine, a sample was tested for the slidability in a mode of "resin ring to resin ring". The slide surface was polished with Emery #1200, and set in the lower side of the device. The contact area was 2 $cm^2$, the surface pressure was 0.49 MPa, the speed was 100 m/s, the slide time was 8 hours; and under the condition, the specific wear volume was measured.

<Example 101>

In a reactor having an inner volume of 50 liters and equipped with a stirrer, a partial condenser, a cooler, a thermometer, a dropping unit, a nitrogen introducing duct, and a strand die, 8,950 g (44.25 mol) of sebacic acid (trade name, Sebacic Acid TA, manufactured by Itoh Oil Chemicals Co., Ltd.), 12.54 g (0.074 mol) of calcium hypophosphite as a phosphorus atom-containing compound (A), and 6.45 g (0.079 mol) of sodium acetate as a polymerization speed regulating agent (B) were, as accurately weighed, fed (the molar ratio of sodium acetate to the phosphorus atom of calcium hypophosphite, (B)/(A) was 0.5). The reactor was fully purged with nitrogen, and then pressurized up to 0.3 MPa with nitrogen, and with stirring, this was heated up to 160°C to uniformly dissolve sebacic acid. Next, 6,026 g (44.25

mol) of paraxylylenediamine (manufactured by Mitsubishi Gas Chemical Company, Inc.) was dropwise added thereto with stirring, taking 170 minutes. During this, the inner temperature of the reactor was continuously elevated up to 281°C. In the dropwise addition step, the pressure was controlled to be 0.5 MPa, and the formed water was removed out of the system via the partial condenser and the cooler. The temperature of the partial condenser was controlled within a range of from 145 to 147°C. After the addition of paraxylylenediamine, the system was depressurized at a speed of 0.4 MPa/h to be normal pressure, taking 60 minutes. During this, the inner temperature rose up to 299°C. Afterwards, the system was depressurized at a speed of 0.002 MPa/min down to be 0.08 MPa, taking 20 minutes. Subsequently, the reaction was continued under 0.08 MPa until the torque of the stirrer reached a predetermined level. The reaction time under 0.08 MPa was 10 minutes. Afterwards, the system was pressurized with nitrogen, and the polymer was taken out through the strand die, and pelletized to give about 13 kg of polyamide (PA101). The reaction time taken after the paraxylylenediamine addition was 90 minutes in total.

The relative viscosity of the polyamide (PA101) was 2.47, the number-average molecular weight Mn was 20,000, Mw/Mn was 2.6, the YI value was 0.7, and the phosphorus atom concentration was 330 ppm.

<Example 102>

About 13 kg of polyamide (PA102) was obtained through melt polycondensation in the same manner as in Example 101, except that the amount of calcium hypophosphite was changed to 6.28 g (0.037 mol) and that of sodium acetate was to 3.03 g (0.037 mol) (the molar ratio of sodium acetate to the phosphorus atom of calcium hypophosphite, (B)/(A) was 0.5). The reaction time taken after the paraxylylenediamine addition was 110 minutes in total.

The relative viscosity of the polyamide (PA102) was 2.46, the number-average molecular weight Mn was 28,000, Mw/Mn was 2.8, the YI value was 2.3, and the phosphorus atom concentration was 169 ppm.

<Example 103>

About 13 kg of polyamide (PA103) was obtained through melt polycondensation in the same manner as in Example 101, except that the amount of calcium hypophosphite was changed to 3.13 g (0.018 mol) and that of sodium acetate was to 1.51 g (0.018 mol) (the molar ratio of sodium acetate to the phosphorus atom of calcium hypophosphite, (B)/(A) was 0.5). The reaction time taken after the paraxylylenediamine addition was 120 minutes in total.

The relative viscosity of the polyamide (PA103) was 2.40, the number-average molecular weight Mn was 23,000, Mw/Mn was 2.6, the YI value was 5.3, and the phosphorus atom concentration was 77 ppm. After used for production, the device was washed with metaxylylenediamine under heat. No resin remained in the device.

<Example 104>

Using the device washed in Example 103, about 13 kg of polyamide (PA104) was obtained through melt polycondensation in the same manner as in Example 101, except that the amount of calcium hypophosphite was changed to 6.28 g (0.037 mol) and that of sodium acetate was to 6.28 g (0.077 mol) (the molar ratio of sodium acetate to the phosphorus atom of calcium hypophosphite, (B)/(A) was 1.0). The reaction time taken after the paraxylylenediamine addition was 150 minutes in total.

The relative viscosity of the polyamide (PA104) was 2.15, the number-average molecular weight Mn was 20,000, Mw/Mn was 3.0, the YI value was 3.1, and the phosphorus atom concentration was 152 ppm. After used for production, the device was washed with metaxylylenediamine under heat. No resin remained in the device.

<Example 105>

Using the device washed in Example 104, about 13 kg of polyamide (PA105) was obtained through melt polycondensation in the same manner as in Example 101, except that the amount of calcium hypophosphite was changed to 6.28 g (0.037 mol) and that of sodium acetate was to 1.51 g (0.018 mol) (the molar ratio of sodium acetate to the phosphorus atom of calcium hypophosphite, (B)/(A) was 0.25). The reaction time taken after the paraxylylenediamine addition was 80 minutes in total.

The relative viscosity of the polyamide (PA105) was 2.41, the number-average molecular weight Mn was 25,000, Mw/Mn was 2.4, the YI value was 2.1, and the phosphorus atom concentration was 170 ppm. After used for production, the device was washed with metaxylylenediamine under heat. No resin remained in the device.

<Example 106>

Using the device washed in Example 105, about 13 kg of polyamide (PA106) was obtained through melt

polycondensation in the same manner as in Example 101, except that the amount of calcium hypophosphite was changed to 6.20 g (0.036 mol) and that of sodium acetate was to 3.60 g (0.044 mol) (the molar ratio of sodium acetate to the phosphorus atom of calcium hypophosphite, (B)/(A) was 0.6). The reaction time taken after the paraxylylenediamine addition was 110 minutes in total.

The relative viscosity of the polyamide (PA106) was 2.30, the number-average molecular weight Mn was 22,000, Mw/Mn was 2.5, the YI value was 2.5, and the phosphorus atom concentration was 150 ppm. After used for production, the device was washed with metaxylylenediamine under heat. No resin remained in the device.

<Example 107>

Using the device washed in Example 106, about 13 kg of polyamide (PA107) was obtained through melt polycondensation in the same manner as in Example 101, except that the amount of calcium hypophosphite was changed to 6.20 g (0.036 mol) and that of sodium acetate was to 5.20 g (0.063 mol) (the molar ratio of sodium acetate to the phosphorus atom of calcium hypophosphite, (B)/(A) was 0.9). The reaction time taken after the paraxylylenediamine addition was 150 minutes in total.

The relative viscosity of the polyamide (PA107) was 2.12, the number-average molecular weight Mn was 18,000, Mw/Mn was 3.1, the YI value was 3.5, and the phosphorus atom concentration was 148 ppm.

<Example 108>

About 13 kg of polyamide (PA108) was obtained through melt polycondensation in the same manner as in Example 101, except that the amount of calcium hypophosphite was changed to 6.28 g (0.037 mol), the type and the amount of the polymerization speed regulating agent (B) were changed to 3.72 g (0.038 mol) of potassium acetate (the molar ratio of potassium acetate to the phosphorus atom of calcium hypophosphite, (B)/(A) was 0.5). The reaction time taken after the paraxylylenediamine addition was 90 minutes in total.

The relative viscosity of the polyamide (PA108) was 2.32, the number-average molecular weight Mn was 22,000, Mw/Mn was 2.6, the YI value was 2.5, and the phosphorus atom concentration was 155 ppm.

<Example 109>

About 13 kg of polyamide (PA109) was obtained through melt polycondensation in the same manner as in Example 101, except that the type and the amount of the phosphorus atom-containing compound were changed to 18.40 g (0.073 mol) of calcium dihydrogen phosphate monohydrate (Mw: 252.07) (the molar ratio of sodium acetate to the phosphorus atom of calcium dihydrogen phosphate monohydrate, (B)/(A) was 0.5), and that the reaction time under 0.08 MPa was changed to 20 minutes. The reaction time taken after the paraxylylenediamine addition was 90 minutes in total.

The relative viscosity of the polyamide (PA109) was 2.35, the number-average molecular weight Mn was 23,000, Mw/Mn was 2.5, the YI value was 8.5, and the phosphorus atom concentration was 300 ppm.

<Example 110>

In a reactor having an inner volume of 50 liters and equipped with a stirrer, a partial condenser, a cooler, a thermometer, a dropping unit, a nitrogen introducing duct, and a strand die, 8,329 g (44.25 mol) of azelaic acid, 6.46 g (0.038 mol) of calcium hypophosphite as a phosphorus atom-containing compound (A), and 3.12 g (0.038 mol) of sodium acetate as a polymerization speed regulating agent (B) were, as accurately weighed, fed (the molar ratio of sodium acetate to the phosphorus atom of calcium hypophosphite, (B)/(A) was 0.5). The reactor was fully purged with nitrogen, and then pressurized up to 0.3 MPa with nitrogen, and with stirring, this was heated up to 160°C to uniformly dissolve azelaic acid. Next, 6,026 g (44.25 mol) of paraxylylenediamine was dropwise added thereto with stirring, taking 170 minutes. During this, the inner temperature of the reactor was continuously elevated up to 270°C. In the dropwise addition step, the pressure was controlled to be 0.5 MPa, and the formed water was removed out of the system via the partial condenser and the cooler. The temperature of the partial condenser was controlled within a range of from 145 to 147°C. After the addition of paraxylylenediamine, the system was depressurized at a speed of 0.4 MPa/h to be normal pressure, taking 60 minutes. During this, the inner temperature rose up to 280°C. Afterwards, the system was depressurized at a speed of 0.002 MPa/min down to be 0.08 MPa, taking 20 minutes. Subsequently, the reaction was continued under 0.08 MPa until the torque of the stirrer reached a predetermined level. The reaction time under 0.08 MPa was 20 minutes. Afterwards, the system was pressurized with nitrogen, and the polymer was taken out through the strand die, and pelletized to give about 13 kg of polyamide (PA110). The reaction time taken after the paraxylylenediamine addition was 100 minutes in total

The relative viscosity of the polyamide (PA110) was 2.25, the number-average molecular weight Mn was 21,000, Mw/Mn was 2.5, the YI value was 1.5, and the phosphorus atom concentration was 168 ppm.

<Example 111>

About 13 kg of polyamide (PA111) was obtained through melt polycondensation in the same manner as in Example 110, except that the type and the amount of the phosphorus atom-containing compound (A) were changed to 10.07 g (0.073 mol) of calcium phosphite monohydrate ($CaHPO_3 \cdot H_2O$, Mw: 138.07) and the amount of sodium acetate was to 4.42 g (0.054 mol) (the molar ratio of sodium acetate to the phosphorus atom of calcium phosphite monohydrate, (B)/(A) was 0.7). The reaction time taken after the paraxylylenediamine addition was 100 minutes in total.

The relative viscosity of the polyamide (PA111) was 2.35, the number-average molecular weight Mn was 22,000, Mw/Mn was 2.6, the YI value was 3.2, and the phosphorus atom concentration was 300 ppm.

<Reference Example 101>

The same melt polycondensation as in Example 101 was carried out, except that the amount of calcium hypophosphite was changed to 12.54 g (0.074 mol) and that of sodium acetate was to 1.51 g (0.018 mmol) (the molar ratio of sodium acetate to the phosphorus atom of calcium hypophosphite, (B)/(A) was 0.1). After the addition of paraxylylenediamine, the system was depressurized at a speed of 0.4 MPa/h, and the inner temperature rose up to 299°C; however, along the way of depressurization down to normal pressure taking 60 minutes, the torque of the stirring unit rapidly increased and the production control became impossible. Accordingly, the depressurization was stopped, and the product was taken out under the condition of nitrogen pressurization. The relative viscosity of the obtained polyamide was 2.72, the number-average molecular weight Mn was 52,000, Mw/Mn was 2.8, the YI value was 2.1, and the phosphorus atom concentration was 310 ppm.

<Reference Example 102>

The same melt polycondensation as in Example 101 was carried out, except that the amount of calcium hypophosphite was changed to 6.28 g (0.037 mol) and that of sodium acetate was to 12.54 g (0.153 mol) (the molar ratio of sodium acetate to the phosphorus atom of calcium hypophosphite, (B)/(A) was 2.1). After the addition of paraxylylenediamine, the production was continued, but the stirring torque could not increase sufficiently, and the product was taken out after 240 minutes. The relative viscosity of the obtained polyamide was 1.85, the number-average molecular weight Mn was 9000, Mw/Mn was 2.5, the YI value was 8.2, and the phosphorus atom concentration was 132 ppm.

<Comparative Example 101>

About 13 kg of polyamide (PA112) was obtained through melt polycondensation in the same manner as in Example 101, except that calcium hypophosphite and sodium acetate were not added. The reaction time taken after the paraxylylenediamine addition was 180 minutes in total.

The relative viscosity of the polyamide (PA112) was 2.31, the number-average molecular weight Mn was 21,000, Mw/Mn was 3.0, the YI value was 24.8, and the phosphorus atom concentration was 0 ppm.

<Comparative Example 102>

About 13 kg of polyamide (PA113) was obtained through melt polycondensation in the same manner as in Example 101, except that that the type and the amount of the phosphorus atom-containing compound (A) were changed to 15.58 g (0.147 mol) of sodium hypophosphite monohydrate (the molar ratio of sodium acetate to the phosphorus atom of calcium hypophosphite, (B)/(A) was 0.5). The time taken after the addition of paraxylylenediamine was 180 minutes in total.

The relative viscosity of the polyamide (PA113) was 2.30, the number-average molecular weight Mn was 16,500, Mw/Mn was 3.8, the YI value was 35.0, and the phosphorus atom concentration was 28 ppm.

<Comparative Example 103>

The same melt polycondensation as in Example 101 was carried out, except that the amount of calcium hypophosphite was changed to 49.65 g (0.292 mol) and that of sodium acetate was to 23.95 g (0.292 mol) (the molar ratio of sodium acetate to the phosphorus atom of calcium hypophosphite, (B)/(A) was 0.5).

After the addition of paraxylylenediamine, the system was depressurized at a speed of 0.4 MPa/h, and the

inner temperature rose up to 299°C; however, along the way of depressurization down to normal pressure taking 60 minutes, the torque of the stirring unit rapidly increased after 30 minutes and the production control became impossible. Accordingly, the depressurization was stopped, and the product was taken out under the condition of nitrogen pressurization. The relative viscosity of the obtained polyamide was 2.42, the number-average molecular weight Mn was 40,000, Mw/Mn was 2.7, the YI value was 0.5, and the phosphorus atom concentration was 1,210 ppm.

Table 2

| | Dicarboxylic Acid | Diamine | Phosphorus Atom-Containing Compound (A) | | | Polymerization Speed Regulating Agent (B) | | Ratio of (B)/(A) (mol) | Phosphorus Atom Concentration of Resin (ppm) | YI Value |
|---|---|---|---|---|---|---|---|---|---|---|
| | | | Name of Substance | Added Amount (mol) | Added Amount (in terms of phosphorus atom) (mol) | Name of Substance | Added Amount (mol) | | | |
| Example 101 | Sebacic acid | PXDA | $Ca(H_2PO_2)_2$ | 0.074 | 0.147 | $CH_3COONa$ | 0.079 | 0.5 | 330 0.7 | |
| Example 102 | Sebacic acid | PXDA | $Ca(H_2PO_2)_2$ | 0.037 | 0.074 | $CH_3COONa$ | 0.037 | 0.5 | 169 | 2.3 |
| Example 103 | Sebacic acid | PXDA | $Ca(H_2PO_2)_2$ | 0.018 | 0.037 | $CH_3COONa$ | 0.018 | 0.5 | 77 | 5.3 |
| Example 104 | Sebacic acid | PXDA | $Ca(H_2PO_2)_2$ | 0.037 | 0.074 | $CH_3COONa$ | 0.077 | 1.0 | 152 | 3.1 |
| Example 105 | Sebacic acid | PXDA | $Ca(H_2PO_2)_2$ | 0.037 | 0.074 | $CH_3COONa$ | 0.018 | 0.25 | 170 | 2.1 |
| Example 106 | Sebacic acid | PXDA | $Ca(H_2PO_2)_2$ | 0.036 | 0.073 | $CH_3COONa$ | 0.044 | 0.6 | 150 | 2.5 |
| Example 107 | Sebacic acid | PXDA | $Ca(H_2PO_2)_2$ | 0.036 | 0.073 | $CH_3COONa$ | 0.063 | 0.9 | 148 | 3.5 |
| Example 108 | Sebacic acid | PXDA | $Ca(H_2PO_2)_2$ | 0.037 | 0.074 | $CH_3COOK$ | 0.038 | 0.5 | 155 | 2.5 |
| Example 109 | Sebacic acid | PXDA | Ca $(H_2PO_4)_2 \cdot H_2O$ | 0.073 | 0.146 | $CH_3COONa$ | 0.079 | 0.5 | 300 | 8.5 |
| Example 110 | Azelaic acid | PXDA | $Ca(H_2PO_2)_2$ | 0.038 | 0.076 | $CH_3COONa$ | 0.038 | 0.5 | 168 | 1.5 |
| Example 111 | Azelaic acid | PXDA | $CaH(PO_3) \cdot H_2O$ | 0.073 | 0.073 | $CH_3COONa$ | 0.054 | 0.7 | 300 | 3.2 |
| Reference Example 101 | Sebacic acid | PXDA | $Ca(H_2PO_2)_2$ | 0.074 | 0.147 | $CH_3COONa$ | 0.018 | 0.1 | 310 | 2.1 |
| Reference Example 102 | Sebacic acid | PXDA | $Ca(H_2PO_2)_2$ | 0.037 | 0.074 | $CH_3COONa$ | 0.153 | 2.1 | 132 | 8.2 |
| Comparative Example 101 | Sebacic acid | PXDA | - | - | - | - | - | | 0 | 24.8 |
| Comparative Example 102 | Sebacic acid | PXDA | $NaH_2PO_2 \cdot H_2O$ | 0.147 | 0.147 | $CH_3COONa$ | 0.079 | 0.5 | 28 | 35.0 |
| Comparative Example 103 | Sebacic acid | PXDA | $Ca(H_2PO_2)_2$ | 0.292 | 0.584 | $CH_3COONa$ | 0.292 | 0.5 | 1210 | 0.5 |

PXDA: paraxylylenediamine
Ratio of (B)/(A): [molar amount of polymerization speed regulating agent (B)]/[molar amount of phosphorus atom of phosphorus atom-containing compound (A)]

The polyamide resin obtained in Comparative Example 101 in which a phosphorus atom-containing compound was not used took much time for polycondensation, and gelled and, in addition, colored. In the polyamide resin obtained in Comparative Example 102 in which sodium hypophosphite was used as a phosphorus atom-containing compound, only 8% of phosphorus used therein could effectively existed in the polyamide, and the compound could not almost function as an antioxidant to prevent coloration of polyamide, and therefore the polyamide was poor in point of the outward appearance thereof (In Examples 101 to 103, from 90 to 95% of phosphorus existed in the resin). In Comparative Example 103 in which the phosphorus atom-containing compound was incorporated excessively so that the phosphorus atom concentration in the polyamide resin could be more than 1,000 ppm, the polycondensation reaction was promoted too much and the reaction control was impossible.
As opposed to these, in Examples 101 to 111, polyamide resins that gelled little with no coloration and had good appearance were obtained.
In preparing polyamide, preferably, an alkali compound is used as a polymerization speed regulating agent for controlling the reaction promoting effect of the phosphorus atom-containing compound. In the present invention, the molar ratio of the polymerization speed regulating agent (B) to the phosphorus atom-containing compound (A), (B)/(A) is preferably from 0.3 to 1.0. When the ratio of (B)/(A) is less than 0.3, the reaction controlling effect of the polymerization speed regulating agent (B) is insufficient and therefore, there is the case that the polycondensation is promoted too much and the agent could not control the reaction (Reference Example 101); but when the ratio of (B)/(A) is more than 1.0, then the polycondensation reaction would be retarded too much by the reaction controlling effect of the polymerization speed regulating agent (B), and therefore there is the case that the reaction could not go on suitably (Reference Example 102).

<Synthesis Example 201>

In a reactor having an inner volume of 50 liters and equipped with a stirrer, a partial condenser, a cooler, a thermometer, a dropping unit, a nitrogen introducing duct, and a strand die, 8,950 g (44.25 mol) of sebacic acid, 12.54 g (0.074 mol) of calcium hypophosphite as a phosphorus atom-containing compound (A), and 6.45 g (0.079 mol) of sodium acetate as a polymerization speed regulating agent (B) were, as accurately weighed, fed (the molar ratio of sodium acetate to the phosphorus atom of calcium hypophosphite, (B)/(A) was 0.5). The reactor was fully purged with nitrogen, and then pressurized up to 0.3 MPa with nitrogen, and with stirring, this was heated up to 160°C to uniformly dissolve sebacic acid. Next, 6,026 g (44.25 mol) of paraxylylenediamine was dropwise added thereto with stirring, taking 170 minutes. During this, the inner temperature of the reactor was continuously elevated up to 281 °C. In the dropwise addition step, the pressure was controlled to be 0.5 MPa, and the formed water was removed out of the system via the partial condenser and the cooler. The temperature of the partial condenser was controlled within a range of from 145 to 147°C. After the addition of paraxylylenediamine, the system was depressurized at a speed of 0.4 MPa/h to be normal pressure, taking 60 minutes. During this, the inner temperature rose up to 299°C. Afterwards, the system was depressurized at a speed of 0.002 MPa/min down to be 0.08 MPa, taking 20 minutes. Subsequently, the reaction was continued under 0.08 MPa until the torque of the stirrer reached a predetermined level. The reaction time under 0.08 MPa was 10 minutes. Afterwards, the system was pressurized with nitrogen, and the polymer was taken out through the strand die, and pelletized to give about 13 kg of polyamide (PA201).
The terminal amino group concentration of the polyamide (PA201) was 41 $\mu$eq/g, and the terminal carboxyl group concentration thereof was 72 $\mu$eq/g. The relative viscosity of the obtained polyamide was 2.11, the number-average molecular weight Mn was 17,100, Mw/Mn was 2.5, the YI value was -4.8, and the phosphorus atom concentration was 300 ppm.

<Example 201>

Using an injection molding machine (Fanuc 100$\alpha$, trade name, manufactured by FANUC Corporation), the polyamide (PA201) was melted at a cylinder temperature of 305°C, and at a mold temperature of 120°C, this was injection-molded into injection-molded pieces having a size shown in Table 1. Thus obtained, the injection-molded pieces were annealed in a hot air drier at 160°C for 1 hour, and then tested for the physical properties thereof. The deflection temperature under load of the molded articles was measured according to the above-mentioned method A.

<Synthesis Example 202>

A polyamide (PA202) was obtained through melt polycondensation in the same manner as in Synthesis Example 201, except that the type and the amount of the dicarboxylic acid were changed to 8,329 g (44.25 mol) of azelaic acid.
The terminal amino group concentration of the polyamide (PA202) was 43 $\mu$eq/g, and the terminal carboxyl group concentration thereof was 82 $\mu$eq/g. The relative viscosity of the obtained polyamide was 2.07, the number-average molecular weight Mn was 16,000, Mw/Mn was 2.5, the YI value was -3.2, and the phosphorus atom concentration was 290 ppm.

<Example 202>

Injection-molded pieces were obtained and tested for the physical properties thereof in the same manner as in Example 201, except that the polyamide (PA201) was changed to the polyamide (PA202).

<Synthesis Example 203>

A polyamide (PA203) was obtained through melt polycondensation in the same manner as in Synthesis Example 201, except that the diamine component was changed to 5,423 g (39.82 mol) of paraxylylenediamine (manufactured by Mitsubishi Gas Chemical Company, Inc.) and 603 g (4.43 mol) of metaxylylenediamine (manufactured by Mitsubishi Gas Chemical Company, Inc.) (90 mol% of the diamine component was paraxylylenediamine and 10 mol% thereof was metaxylylenediamine).

The terminal amino group concentration of the polyamide (PA203) was 48 μeq/g. and the terminal carboxyl group concentration thereof was 81 μeq/g. The relative viscosity of the obtained polyamide was 2.11, the number-average molecular weight Mn was 16,300, Mw/Mn was 2.7, the YI value was -1.0, and the phosphorus atom concentration was 310 ppm.

<Example 203>

Injection-molded pieces were obtained and tested for the physical properties thereof in the same manner as in Example 201, except that the polyamide (PA201) was changed to the polyamide (PA203).

<Comparative Example 201>

Using an injection molding machine (Fanuc 100α, trade name, manufactured by FANUC Corporation), a nylon 46 resin (trade name, STANYL, manufactured by DSM in the Netherlands) was melted at a cylinder temperature of 310°C, and at a mold temperature of 120°C, this was injection-molded into injection-molded pieces having a size shown in Table 1. Thus obtained, the injection-molded pieces were tested for the physical properties thereof, in the same manner as in Example 201.

<Comparative Example 202>

Injection-molded pieces were obtained and tested for the physical properties thereof in the same manner as in Example 201, except that the polyamide (PA201) was changed to a nylon 66 resin (trade name, AMILAN; grade, CM3001-N, manufactured by Toray Industries, Inc.).

The resins and the molded articles in Examples 201 to 203 and Comparative Examples 201 and 202 were tested for the physical properties thereof. The results are shown in Table 3. The mean molecular weight and the relative viscosity of the nylon 46 resin and the nylon 66 resin used in Comparative Examples 201 and 202 were not measured.

Table 3

| | Example 201 | Example 202 | Example 203 | Comparative Example 201 | Comparative Example 202 |
|---|---|---|---|---|---|
| Polyamide | PA201 | PA202 | PA203 | STANYL | AMILAN |
| Diamine Component | PXDA | PXDA | PXDA 90 mol% MXDA 10 mol% | Tetramethylenediamine | Hexamethylenediamine |
| Dicarboxylic Acid Component | Sebacic acid | Azelaic acid | Sebacic acid | Adipic acid | Adipic acid |
| Weight-Average Molecular Weight Mw | 43000 | 40000 | 44000 | | |

(continued)

| | Example 201 | Example 202 | Example 203 | Comparative Example 201 | Comparative Example 202 |
|---|---|---|---|---|---|
| Number-Average Molecular Weight Mn | 17100 | 16000 | 16300 | - | - |
| Mw/Mn | 2.5 | 2.5 | 2.7 | - | - |
| Relative Viscosity | 2.11 | 2.07 | 2.11 | | |
| Melting Point Tm (°C) | 292 | 281 | 271 | 295 | 265 |
| Tensile Strength (MPa) | 88.6 | 87.5 | 86.5 | 99.0 | 72 |
| Modulus of Tensile Elasticity (GPa) | 3.38 | 3.21 | 3.30 | 3.84 | 1.8 |
| Tensile Elongation (%) | 12 | 11 | 13 | 7 | 25 |
| Deflection Temperature under load (°C) | 125 | 122 | 112 | 190 | 75 |
| Equilibrium Water Absorption (%) | 2.8 | 3.0 | 2.8 | 12 | 8.4 |
| Soldering Heat Resistance (250°C) | A | A | A | A | B |
| Soldering Heat Resistance (260°C) | A | A | A | B | B |
| Soldering Heat Resistance (270°C) | A | A | A | B | B |
| STANYL: trade name, manufactured by DSM, nylon 46 resin<br>AMILAN: trade name, manufactured by Toray Industries, Inc., nylon 66 resin | | | | | |

As is clear from Table 3, the molded articles of Comparative Examples 201 and 202 in which nylon 46 resin or nylon 66 resin was used both had high equilibrium water absorption and the soldering heat resistance thereof was not good. The nylon 46 resin that has heretofore been investigated as a resin for electronic parts is a resin obtained from tetramethylenediamine and adipic acid, and is excellent in heat resistance and mechanical properties; however, since the amide group ratio therein is higher than that in other ordinary polyamide resins such as nylon 6 resin and nylon 66 resin, the resin has a drawback in that its water absorption is high. Accordingly, though the nylon 46 resin could have excellent heat resistance and mechanical properties in a dry condition, the reduction in the heat resistance and the mechanical properties of the nylon 46 resin is larger in actual use than that of other ordinary polyamide resins since the water absorption of the former is higher. In addition, the high water absorption means that the dimensional change would be thereby large, and therefore, the dimensional accuracy of the resin is not on a satisfactory level, and use of the resin in parts that require high accuracy is difficult. Further, depending on the water-absorbing condition thereof, the surface of the parts formed of the resin may have a trouble of swelling in mounting on a substrate according to a surface-mounding system, and the performance and the reliability of the parts would be thereby greatly lowered.

As opposed to these, the molded articles of Examples 201 to 203 had low water absorption and were excellent

in soldering heat resistance, and in addition, these were further excellent in heat resistance and mechanical properties.

<Example 301>

0.2 parts by mass of talc (Micron White 5000A, trade name manufactured by Hayashi Kasei Co., Ltd.) as a crystal nucleating agent was dry-blended in the polyamide (PA201), and then melt-kneaded in a double-screw extruder. Using an injection-molding machine (Fanuc 100α, trade name, manufactured by FANUC Corporation), this was melted at a cylinder temperature of 305°C, and at a mold temperature of 120°C, this was injection-molded into injection-molded pieces having a size shown in Table 1. Thus obtained, the injection-molded pieces were tested for the physical properties thereof, in the same manner as in Example 201.

<Example 302>

Injection-molded pieces were obtained and tested for the physical properties thereof in the same manner as in Example 301, except that the polyamide (PA201) was changed to polyamide (PA202).

<Example 303>

Injection-molded pieces were obtained and tested for the physical properties thereof in the same manner as in Example 301, except that the polyamide (PA201) was changed to polyamide (PA203).

<Comparative Example 301>

0.2 parts by mass of talc (Micron White 5000A, trade name, manufactured by Hayashi Kasei Co., Ltd.) as a crystal nucleating agent was dry-blended in a nylon 46 resin (trade name, STANYL, manufactured by DSM in the Netherlands), and then melt-kneaded in a double-screw extruder. Using an injection-molding machine (Fanuc 100α, trade name, manufactured by FANUC Corporation), this was melted at a cylinder temperature of 310°C, and at a mold temperature of 120°C, this was injection-molded into injection-molded pieces having a size shown in Table 1. Thus obtained, the injection-molded pieces were tested for the physical properties thereof, in the same manner as in Example 201.

The resins and the molded articles in Examples 301 to 303 and Comparative Example 301 were tested for the physical properties thereof. The results are shown in Table 4. The mean molecular weight and the relative viscosity of the nylon 46 resin used in Comparative Example 301 were not measured.

Table 4

| | Example 301 | Example 302 | Example 303 | Comparative Example 301 |
|---|---|---|---|---|
| Polyamide | PA201 | PA202 | PA203 | STANYL |
| Diamine Component | PXDA | PXDA | PXDA 90 mol% MXDA 10 mol% | Tetramethylenediamine |
| Dicarboxylic Acid Component | Sebacic acid | Azelaic acid | Sebacic acid | Adipic acid |
| Weight-Average Molecular Weight Mw | 43000 | 40000 | 44000 | - |
| Number-Average Molecular Weight Mn | 17300 | 16000 | 16300 | - |
| Mw/Mn | 2.5 | 2.5 | 2.7 | - |
| Relative Viscosity | 2.11 | 2.07 | 2.11 | - |
| Melting Point Tm (°C) | 292 | 281 | 271 | 295 |
| Crystal Nucleating Agent (part by mass) | Talc 0.2 | Talc 0.2 | Talc 0.2 | Talc 0.2 |
| Tensile Strength (MPa) | 88.6 | 87.5 | 86.5 | 99.0 |

(continued)

| | Example 301 | Example 302 | Example 303 | Comparative Example 301 |
|---|---|---|---|---|
| Modulus of Tensile Elasticity (GPa) | 3.38 | 3.21 | 3.30 | 3.84 |
| Deflection Temperature under load (°C) | 125 | 122 | 112 | 190 |
| Equilibrium Water Absorption (%) | 2.6 | 2.8 | 2.6 | 12 |
| Soldering Heat Resistance (260°C) | A | A | A | B |
| PXDA: paraxylylenediamine<br>MXDA: metaxylylenediamine<br>STANYL: trade name, manufactured by DSM, nylon 46 resin | | | | |

As is clear from Table 4, the molded article of Comparative Example 301 in which nylon 46 resin was used had high equilibrium water absorption and the soldering heat resistance thereof was not good. As opposed to these, the molded articles of Examples 301 to 303 have low water absorption and are excellent in soldering heat resistance, and in addition, these are further excellent in heat resistance and mechanical properties.

<Synthesis Example 401>

A polyamide (PA401) was obtained through melt polycondensation in the same manner as in Synthesis Example 101, except that the type and the amount of the dicarboxylic acid were changed to 8,329 g (44.25 mol) of azelaic acid (trade name, EMEROX 1144, manufactured by Cognis).

The relative viscosity of the polyamide (PA401) was 2.22, the number-average molecular weight Mn was 17,000, Mw/Mn was 2.5, the YI value was -1.8, and the phosphorus atom concentration was 300 ppm.

<Example 401>

The polyamide (PA101) was dried under reduced pressure at 150°C for 7 hours, and injection-molded at a cylinder temperature of 300°C and a mold temperature of 120°C, using an injection-molding machine (Fanuc i100, trade name, manufactured by FANUC Corporation), thereby producing test pieces for evaluation having a size shown in Table 1. Thus obtained, the test pieces were tested for the physical properties thereof. The deflection temperature under load of the molded articles was measured according to the above-mentioned method A. The evaluation results are shown in Table 5.

<Example 402>

Test pieces for evaluation were obtained and tested for the physical properties thereof in the same manner as in Example 401, except that the polyamide (PA101) was changed to the polyamide (PA401). The evaluation results are shown in Table 5.

<Example 403>

Test pieces for evaluation were obtained and tested for the physical properties thereof in the same manner as in Example 401, except that the polyamide (PA101) was changed to the polyamide (PA203). The evaluation results are shown in Table 5.

<Comparative Example 401>

Polyamide 6T (polyhexamethylene terephthalamide, trade name, Amodel, manufactured by Solvay) was injection-molded at a cylinder temperature of 340°C and a mold temperature of 130°C, using an injection-molding machine (Fanuc i100, trade name, manufactured by FANUC Corporation), thereby producing test pieces for evaluation having a size shown in Table 1. Thus obtained, the test pieces were tested for the physical properties thereof in the same manner

as in Example 401. The evaluation results are shown in Table 5.

<Comparative Example 402>

Test pieces for evaluation were obtained and tested for the physical properties thereof in the same manner as in Example 401, except that the polyamide (PA101) was changed to a nylon 66 resin (trade name, AMILAN; grade, CM3001-N, manufactured by Toray Industries, Inc.). The evaluation results are shown in Table 5.

Table 5

| | Example 401 | Example 402 | Example 403 | Comparative Example 401 | Comparative Example 402 |
|---|---|---|---|---|---|
| Polyamide | PA101 | PA401 | PA203 | Amodel | AMILAN |
| Physical Properties of Molded Articles | | | | | |
| Tensile Strength (MPa) | 88.6 | 87.5 | 86.5 | 99.0 | 72 |
| Modulus of Tensile Elasticity (GPa) | 3.4 | 3.2 | 3.3 | 4.9 | 1.8 |
| Tensile Elongation (%) | 12 | 11 | 13 | 2 | 25 |
| Deflection Temperature under load (°C) | 125 | 122 | 112 | 120 | 75 |
| Equilibrium Water Absorption (% by mass) | 2.8 | 3.0 | 2.8 | 6.4 | 8.4 |
| Specific Wear Volume (*) | 0.4 | 0.6 | 0.7 | 3.2 | 2.4 |
| (*) $mm^3$/kgf·km<br>Amodel: trade name, manufactured by Solvay, polyamide 6T<br>AMILAN: trade name, manufactured by Toray Industries, Inc., nylon 66 resin | | | | | |

As is clear from Table 5, the molded articles of Comparative Examples 401 and 402 in which polyamide 6T or nylon 66 was used both had a large specific wear volume and the slidability thereof was low, and in addition, these had high equilibrium water absorption. The 6T polyamide comprising, as main component thereof, a polyamide formed of 1,6-hexanediamine and terephthalic acid, which has heretofore been investigated as a resin for slide members and as a resin for blow moldings, has a melting point of 370°C or so, and therefore must be melt-molded at a temperature higher than the decomposition temperature of the polymer, or that is, the polyamide resin could not be put into practical use.

As opposed to these, the molded articles of Examples 401 to 403 were excellent in slidability and had low water absorption and, in addition, these were excellent in mechanical properties. As shown in Table 3 shown above, the melting point of the polyamide prepared through polymerization of sebacic acid and paraxylylenediamine was 292°C, the melting point of the polyamide prepared through polymerization of azelaic acid and paraxylylenediamine was 281°C, and the melting point of the polyamide prepared through polymerization of sebacic acid and 90 mol% of paraxylylenediamine with 10 mol% of metaxylylenediamine was 271°C; or that is, the melting point of all these polyamides is lower than that of 6T polyamide. Accordingly, the polyamide in the present invention is practicable as a resin for slide members and as a resin for blow moldings.

<Example 501>

The polyamide (PA101) was dried under reduced pressure at 150°C for 7 hours, and injection-molded at a cylinder temperature of 300°C and a mold temperature of 80°C, using an injection-molding machine (Fanuc i100, trade name, manufactured by FANUC Corporation), thereby producing test pieces for evaluation having a size shown in Table 1. Thus obtained, the test pieces were tested for the physical properties thereof. The deflection temperature under load of the molded articles was measured according to the above-mentioned method B. The evaluation results are shown in Table 6.

<Example 502>

Test pieces for evaluation were obtained and tested for the physical properties thereof in the same manner as

in Example 501, except that the polyamide (PA101) was changed to the polyamide (PA401). The evaluation results are shown in Table 6.

<Example 503>

Test pieces for evaluation were obtained and tested for the physical properties thereof in the same manner as in Example 501, except that the polyamide (PA101) was changed to the polyamide (PA203). The evaluation results are shown in Table 6.

<Comparative Example 501>

Polyamide 6T (polyhexamethylene terephthalamide, trade name, Amodel, manufactured by Solvay) was injection-molded at a cylinder temperature of 340°C and a mold temperature of 80°C, using an injection-molding machine (Fanuc i100, trade name, manufactured by FANUC Corporation), thereby producing test pieces for evaluation having a size shown in Table 1. Thus obtained, the test pieces were tested for the physical properties thereof in the same manner as in Example 501. The evaluation results are shown in Table 6.

<Example 504>

Test pieces for evaluation were obtained in the same manner as in Example 501 except that the polyamide (PA101) was changed to the polyamide (PA103), and the molded articles were tested for the impact strength and the equilibrium water absorption thereof. The results are shown in Table 6. As a result, the polyamide (PA101) and the polyamide (PA103) are both polyamides produced through polymerization of sebacic acid and paraxylylenediamine, and their impact strength and the equilibrium water absorption were both nearly on the same level.

The viscosity after melting for 6 minutes and that after melting for 30 minutes of the polyamide (PA103) were compared and the melt viscosity retention thereof was determined. The viscosity after melting for 6 minutes was 600 Pa·s, and the viscosity after melting for 30 minutes was 525 Pa·s; or that is, the melt viscosity change was small and the melt viscosity retention was 84%. In addition, the melt viscosity of the polyamide (PA103) was measured at 300°C and 310°C, and the temperature dependence of the melt viscosity was determined. At 300°C, the melt viscosity was 115 Pa·s, and at 310°C, it was 97 Pa·s. Accordingly, the temperature dependence of the melt viscosity was also small.

<Example 505>

Test pieces for evaluation were obtained in the same manner as in Example 501 except that the polyamide (PA101) was changed to the polyamide (PA104), and the molded articles were tested for the impact strength and the equilibrium water absorption thereof. The results are shown in Table 6. As a result, the polyamide (PA101) and the polyamide (PA104) are both polyamides produced through polymerization of sebacic acid and paraxylylenediamine, and their impact strength and the equilibrium water absorption were both nearly on the same level.

The viscosity after melting for 6 minutes and that after melting for 30 minutes of the polyamide (PA104) were compared and the melt viscosity retention thereof was determined. The viscosity after melting for 6 minutes was 476 Pa·s, and the viscosity after melting for 30 minutes was 388 Pa·s; or that is, the melt viscosity change was small and the melt viscosity retention was 84%. In addition, the melt viscosity of the polyamide (PA104) was measured at 300°C and 310°C, and the temperature dependence of the melt viscosity was determined. At 300°C, the melt viscosity was 103 Pa·s, and at 310°C, it was 90 Pa·s. Accordingly, the temperature dependence of the melt viscosity was also small.

Table 6

| | Example 501 | Example 502 | Example 503 | Example 504 | Example 505 | Comparative Example 501 |
|---|---|---|---|---|---|---|
| Polyamide | PA101 | PA401 | PA203 | PA103 | PA104 | Amodel |
| Physical Properties of Molded Articles | | | | | | |
| Tensile Strength (MPa) | 88.6 | 87.5 | 86.5 | - | - | 99.0 |
| Modulus of Tensile Elasticity (GPa) | 3.4 | 3.2 | 3.3 | - | - | 2 |
| Deflection Temperature under load (°C) | 125 | 122 | 112 | - | - | 120 |

(continued)

| | | Example 501 | Example 502 | Example 503 | Example 504 | Example 505 | Comparative Example 501 |
|---|---|---|---|---|---|---|---|
| Impact Strength (kJ/m$^2$) | | 14 | 13.5 | 14.5 | 14.1 | 13.9 | 12 |
| Equilibrium Water Absorption (% by mass) | | 2.8 | 3.0 | 2.8 | 2.9 | 2.8 | 3.2 |
| Melt Viscosity | after melted for 6 min (Pa·s) | - | - | - | 600 | 476 | - |
| | after melted for 30 min (Pa·s) | - | - | - | 525 | 388 | - |
| | Melt Viscosity Retention | - | - | - | 84% | 87% | - |
| Temperature Dependence of Melt Viscosity | 300°C (Pa·s) | - | - | - | 115 | 103 | - |
| | 310°C (Pa·s) | - | - | - | 97 | 90 | - |
| Amodel: trade name, manufactured by Solvay, polyamide 6T | | | | | | | |

As is clear from Table 6, the molded article of Comparative Example 501 in which polyamide 6T was used had low modulus of tensile elasticity and low impact strength, and was poor in parison characteristics. As opposed to this, the molded articles of Examples 501 to 505 were excellent in impact resistance and excellent in parison characteristics, and were in addition excellent in other various properties such as mechanical properties, heat resistance and water absorption resistance.

INDUSTRIAL APPLICABILITY

The polyamide resin of the present invention has excellent moldability, and has good heat resistance, water absorption resistance and chemical resistance and excellent mechanical properties. In addition, its color tone is good and the resin gels little. Accordingly, the polyamide resin of the present invention can be favorably used for industrial, engineering and domestic goods such as automobile parts, electric/electronic parts, machinery parts. In particular, the resin is excellent in soldering heat resistance and can be favorably used as a resin for surface-mounting parts and a resin for electronic parts. In addition, the resin is excellent in slidability and can be favorably used as slide members. Further, the resin is excellent in parison characteristics and the temperature dependence of the melt viscosity thereof is small, and therefore the resin can be favorably used as blow moldings.

## Claims

**1.** A polyamide resin comprising a diamine unit containing 70 mol% or more of a paraxylylenediamine unit and a dicarboxylic acid unit containing 70 mol% or more of a linear aliphatic dicarboxylic acid unit having from 6 to 18 carbon atoms,
wherein the polyamide resin has a phosphorus atom concentration of from 50 to 1,000 ppm and a YI value of 10 or less in the color difference test in accordance with JIS-K-7105, and
is obtainable by a production method which comprises a step of melt polycondensation of a diamine component containing 70 mol% or more of paraxylylenediamine and a dicarboxylic acid component containing 70 mol% or more of a linear aliphatic dicarboxylic acid having from 6 to 18 carbon atoms, in the presence of a phosphorus atom-containing compound (A) which is at least one selected from a group consisting of calcium hypophosphite, magnesium hypophosphite, calcium phosphite, and calcium dihydrogen phosphate.

2. The polyamide resin according to claim 1, wherein the linear aliphatic dicarboxylic acid unit is at least one selected from a group consisting of an adipic acid unit, an azelaic acid unit, a sebacic acid unit, an undecane-diacid unit and a dodecane-diacid unit.

3. The polyamide resin according to claim 1 or 2, wherein the linear aliphatic dicarboxylic acid unit is a sebacic acid unit and/or an azelaic acid unit.

4. The polyamide resin according to any of claims 1 to 3, which comprises a diamine unit containing 90 mol% or more of a paraxylylenediamine unit and a dicarboxylic acid unit containing 90 mol% or more of a sebacic acid unit and/or an azelaic acid unit.

5. The polyamide resin according to any of claims 1 to 4, which has a relative viscosity falling within a range of from 1.8 to 4.2,
wherein the relative viscosity is the ratio of the dropping time (t) of the solution prepared by dissolving 1 g of polyamide in 100 mL of 96% sulfuric acid, as measured with a Cannon-Fenske viscometer at 25°C, to the dropping time (t0) of 96% sulfuric acid alone measured in the same manner, and is represented by the following formula (1):

$$\text{Relative Viscosity} = t/t0 \qquad (1).$$

6. The polyamide resin according to any of claims 1 to 5, which has a number-average molecular weight (Mn), as measured through gel permeation chromatography, falling within a range of from 10,000 to 50,000, and a degree of dispersion (weight-average molecular weight/number-average molecular weight = Mw/Mn) falling within a range of from 1.5 to 5.0.

7. A polyamide resin composition comprising 100 parts by mass of a polyamide resin according to any one of claims 1 to 6 and from 0.01 to 2 parts by mass of a crystal nucleating agent.

8. A method for producing a polyamide resin according to any one of claims 1 to 6, which comprises a step of melt polycondensation of a diamine component containing 70 mol% or more of paraxylylenediamine and a dicarboxylic acid component containing 70 mol% or more of a linear aliphatic dicarboxylic acid having from 6 to 18 carbon atoms, in the presence of a phosphorus atom-containing compound (A),
wherein the phosphorus atom-containing compound (A) is at least one selected from a group consisting of calcium hypophosphite, magnesium hypophosphite, calcium phosphite, and calcium dihydrogen phosphate.

9. The method for producing a polyamide resin according to claim 8, wherein the melt polycondensation is attained in the presence of the phosphorus atom-containing compound (A) and a polymerization speed regulating agent (B), and the molar ratio of the polymerization speed regulating agent (B) to the phosphorus atom of the phosphorus atom-containing compound (A) ([molar amount of polymerization speed regulating agent (B)]/[molar amount of phosphorus atom of phosphorus atom-containing compound (A)]) in the polycondensation system is from 0.3 to 1.0.

10. The method for producing a polyamide resin according to claim 8 or 9, wherein the polymerization speed regulating agent (B) is at least one selected from a group consisting of alkali metal hydroxides, alkaline earth metal hydroxides, alkali metal acetates and alkaline earth metal acetates.

11. The method for producing a polyamide resin according to claim 10, wherein the polymerization speed regulating agent (B) is at least one selected from a group consisting of sodium hydroxide, sodium acetate and potassium acetate.

12. A molded article containing the polyamide resin according to any of claims 1 to 6 or the polyamide resin composition according to claim 7.

13. Use of the molded article according to claim 12 as electric part, electronic part, slide member, blow molding, or automobile part.

## Patentansprüche

1. Polyamidharz, umfassend eine Diamineinheit, die 70 mol-% oder mehr einer Paraxylylendiamineinheit enthält, und eine Dicarbonsäureeinheit, die 70 mol-% oder mehr einer linearen aliphatischen Dicarbonsäureeinheit mit 6 bis 18 Kohlenstoffatomen enthält,
wobei das Polyamidharz eine Phosphoratomkonzentration von 50 bis 1.000 ppm und einen YI-Wert von 10 oder weniger im Farbdifferenztest gemäß JIS-K-7105 aufweist und
durch ein Herstellungsverfahren erhältlich ist, das einen Schritt zur Schmelzpolykondensation einer Diaminkomponente, die 70 mol-% oder mehr Paraxylylendiamin enthält, und einer Dicarbonsäurekomponente, die 70 mol-% oder mehr einer linearen aliphatischen Dicarbonsäure mit 6 bis 18 Kohlenstoffatomen enthält, in Gegenwart einer Phosphoratom-haltigen Verbindung (A), die mindestens eines ausgewählt aus der Gruppe, bestehend aus Calciumhypophosphit, Magnesiumhypophosphit, Calciumphosphit und Calciumdihydrogenphosphat, ist, umfasst.

2. Polyamidharz gemäß Anspruch 1, wobei die lineare aliphatische Dicarbonsäureeinheit mindestens eine, ausgewählt aus der Gruppe, bestehend aus einer Adipinsäureeinheit, einer Azelainsäureeinheit, einer Sebacinsäureeinheit, einer Undecandisäureeinheit und einer Dodecandisäureeinheit, ist.

3. Polyamidharz gemäß Anspruch 1 oder 2, wobei die lineare aliphatische Dicarbonsäureeinheit eine Sebacinsäureeinheit und/oder eine Azelainsäureeinheit ist.

4. Polyamidharz gemäß irgendeinem der Ansprüche 1 bis 3, das eine Diamineinheit, die 90 mol-% oder mehr einer Paraxylylendiamineinheit enthält, und eine Dicarbonsäureeinheit, die 90 mol-% oder mehr einer Sebacinsäureeinheit und/oder einer Azelainsäureeinheit enthält, umfasst.

5. Polyamidharz gemäß irgendeinem der Ansprüche 1 bis 4, das eine relative Viskosität aufweist, die in einen Bereich von 1,8 bis 4,2 fällt,
wobei die relative Viskosität ein Verhältnis der Tropfzeit (t) der Lösung, die durch Lösen von 1 g Polyamid in 100 ml 95 %-iger Schwefelsäure hergestellt wird, gemessen mit einem Cannon-Fenske-Viskosimeter bei 25°C, zu der Tropfzeit (t0) von 95 %-iger Schwefelsäure allein, gemessen in derselben Weise, ist und durch die folgende Formel (1) dargestellt wird:

$$\text{Relative Viskosität} = t/t0 \qquad (1).$$

6. Polyamidharz gemäß irgendeinem der Ansprüche 1 bis 5, das ein durch Gelpermeationschromatographie gemessenes zahlengemitteltes Molekulargewicht (Mn), das in einen Bereich von 10.000 bis 50.000 fällt, und einem Dispersionsgrad (gewichtsgemitteltes Molekulargewicht/zahlengemitteltes Molekulargewicht = Mw/Mn), der in einen Bereich von 1,5 bis 5,0 fällt, aufweist.

7. Polyamidharzzusammensetzung, umfassend 100 Masseteile eines Polyamidharzes gemäß irgendeinem der Ansprüche 1 bis 6 und 0,01 bis 2 Masseteile eines Kristallkeimbildungsmittels umfasst.

8. Verfahren zur Herstellung eines Polyamidharzes gemäß irgendeinem der Ansprüche 1 bis 6, das einen Schritt zur Schmelzpolykondensation einer Diaminkomponente, die 70 mol-% oder mehr Paraxylylendiamin enthält, und einer Dicarbonsäurekomponente, die 70 mol-% oder mehr einer linearen aliphatischen Dicarbonsäure mit 6 bis 18 Kohlenstoffatomen enthält, in Gegenwart einer Phosphoratom-haltigen Verbindung (A) umfasst,
wobei die Phosphoratom-haltige Verbindung (A) mindestens eines, ausgewählt aus der Gruppe, bestehend aus Calciumhypophosphit, Magnesiumhypophosphit, Calciumphosphit und Calciumdihydrogenphosphat, ist.

9. Verfahren zur Herstellung eines Polyamidharzes gemäß Anspruch 8, wobei die Schmelzpolykondensation in Gegenwart der Phosphoratom-haltigen Verbindung (A) und eines Polymerisationsgeschwindigkeitsregulierungsmittels (B) erreicht wird und das Molverhältnis des Polymerisationsgeschwindigkeitsregulierungsmittels (B) zu dem Phosphoratom der Phosphoratom-haltigen Verbindung (A) ([molare Menge des Polymerisationsgeschwindigkeitsregulierungsmittels (B)]/[molare Menge des Phosphoratoms der Phosphoratom-haltigen Verbindung (A)]) in dem Polykondensationssystem 0,3 bis 1,0 beträgt.

10. Verfahren zur Herstellung eines Polyamidharzes gemäß Anspruch 8 oder 9, wobei das Polymerisationsgeschwindigkeitsregulierungsmittel (B) mindestens eines, ausgewählt aus einer Gruppe, besehend aus Alkalimetallhydroxiden, Erdalkalimetallhydroxiden, Alkalimetallacetaten und Erdalkalimetallacetaten, ist.

**11.** Verfahren zur Herstellung eines Polyamidharzes gemäß Anspruch 10, wobei das Polymerisationsgeschwindigkeitsregulierungsmittel (B) mindestens eines, ausgewählt aus einer Gruppe, bestehend aus Natriumhydroxid, Natriumacetat und Kaliumaceatat, ist.

**12.** Formartikel, der das Polyamidharz gemäß irgendeinem der Ansprüche 1 bis 6 oder die Polyamidharzzusammensetzung gemäß Anspruch 7 enthält.

**13.** Verwendung des Formartikels gemäß Anspruch 12 als elektrisches Bauteil, elektronisches Bauteil, Gleitelement, Blasformteil oder Automobilbauteil.

## Revendications

**1.** Résine de polyamide comprenant un motif diamine contenant 70 % en moles ou plus d'un motif paraxylylènediamine et un motif acide dicarboxylique contenant 70 % en moles ou plus d'un motif acide dicarboxylique aliphatique linéaire ayant 6 à 18 atomes de carbone,
dans laquelle la résine de polyamide a une concentration d'atomes de phosphore de 50 à 1000 ppm et une valeur YI de 10 ou moins au test de différence de couleur conformément à JIS-K-7105, et
peut être obtenue par un procédé de production qui comprend une étape de polycondensation à l'état fondu d'un constituant diamine contenant 70 % en moles ou plus de paraxylylènediamine et d'un constituant acide dicarboxylique contenant 70 % en moles ou plus d'un acide dicarboxylique aliphatique linéaire ayant 6 à 18 atomes de carbone, en présence d'un composé contenant un atome de phosphore (A) qui est au moins un sélectionné dans un groupe constitué par l'hypophosphite de calcium, l'hypophosphite de magnésium, le phosphite de calcium, et le dihydrogénophosphate de calcium.

**2.** Résine de polyamide selon la revendication 1, dans laquelle le motif acide dicarboxylique aliphatique linéaire est au moins un sélectionné dans un groupe constitué par un motif acide adipique, un motif acide azélaïque, un motif acide sébacique, un motif undécane-diacide et un motif dodécane-diacide.

**3.** Résine de polyamide selon la revendication 1 ou 2, dans laquelle le motif acide dicarboxylique aliphatique linéaire est un motif acide sébacique et/ou un motif acide azélaïque.

**4.** Résine de polyamide selon l'une quelconque des revendications 1 à 3, qui comprend un motif diamine contenant 90 % en moles d'un motif paraxylylènediamine et un motif acide dicarboxylique contenant 90% en moles ou plus d'un motif acide sébacique et/ou d'un motif acide azélaïque.

**5.** Résine de polyamide selon l'une quelconque des revendications 1 à 4, qui a une viscosité relative s'inscrivant au sein d'une plage de 1,8 à 4,2,
dans laquelle la viscosité relative est le rapport du temps de chute (t) de la solution préparée en dissolvant 1 g de polyamide dans 100 ml d'acide sulfurique à 96 %, mesuré avec un viscosimètre Cannon-Fenske à 25 °C, au temps de chute (t0) de l'acide sulfurique à 96 % seul mesuré de la même manière, et est représentée par la formule (1) suivante :

$$\text{Viscosité relative} = t/t0 \qquad (1).$$

**6.** Résine de polyamide selon l'une quelconque des revendications 1 à 5, qui a un poids moléculaire moyen en nombre (Mn), mesuré par chromatographie par perméation de gel, s'inscrivant dans une plage de 10 000 à 50 000, et un degré de dispersion (poids moléculaire moyen en poids/poids moléculaire moyen en nombre = Mw/Mn) s'inscrivant au sein d'une plage de 1,5 à 5,0.

**7.** Composition de résine de polyamide comprenant 100 parties en masse d'une résine de polyamide selon l'une quelconque des revendications 1 à 6 et 0,01 à 2 parties en masse d'un agent de nucléation de cristaux.

**8.** Procédé pour produire une résine de polyamide selon l'une quelconque des revendications 1 à 6, qui comprend une étape de polycondensation à l'état fondu d'un constituant diamine contenant 70% en moles ou plus de paraxylylènediamine et d'un constituant acide dicarboxylique contenant 70 % en moles ou plus d'un acide dicarboxylique aliphatique linéaire ayant 6 à 18 atomes de carbone, en présence d'un composé contenant un atome de phosphore (A),
dans lequel le composé contenant un atome de phosphore (A) est au moins un sélectionné dans un groupe constitué par l'hypophosphite de calcium, l'hypophosphite de magnésium, le phosphite de calcium et le dihydrogénophosphate de calcium.

**9.** Procédé pour produire une résine de polyamide selon la revendication 8, dans lequel la polycondensation à l'état fondu est obtenue en présence du composé contenant un atome de phosphore (A) et d'un agent de régulation de vitesse de polymérisation (B), et le rapport molaire de l'agent de régulation de vitesse de polymérisation (B) à l'atome de phosphore du composé contenant un atome de phosphore (A) ([quantité molaire d'agent de régulation de vitesse de polymérisation (B)]/[quantité molaire d'atome de phosphore du composé contenant un atome de phosphore (A)]) dans le système de polycondensation est de 0,3 à 1,0.

**10.** Procédé pour produire une résine de polyamide selon la revendication 8 ou 9, dans lequel l'agent de régulation de vitesse de polymérisation (B) est au moins un sélectionné dans un groupe constitué par des hydroxydes de métal alcalin, des hydroxydes de métal alcalinoterreux, des acétates de métal alcalin et des acétates de métal alcalinoterreux.

**11.** Procédé pour produire une résine de polyamide selon la revendication 10, dans lequel l'agent de régulation de vitesse de polymérisation (B) est au moins un sélectionné à partir d'un groupe constitué par l'hydroxyde de sodium, l'acétate de sodium et l'acétate de potassium.

**12.** Article moulé contenant la résine de polyamide selon l'une quelconque des revendications 1 à 6 ou la composition de résine de polyamide selon la revendication 7.

**13.** Utilisation de l'article moulé selon la revendication 12 en tant que pièce électrique, pièce électronique, élément coulissant, moulage par extrusion-soufflage, ou pièce automobile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 54032458 B
- JP 3456501 B
- JP 49045960 A